# EUROPEAN PATENT APPLICATION

(11) **EP 4 845 230 A1**
(43) Date of publication of application: **25.11.2026**
(21) Application number: 24917742.9
(22) Date of filing: 18.01.2024
(51) Int. Cl.: H04W 48/14

(54) **DATA TRANSMISSION METHOD AND APPARATUS, DATA RECEPTION METHOD AND APPARATUS, AND COMMUNICATION SYSTEM**

(71) Applicant: 1FINITY INC., Kawasaki-shi, Kanagawa 211-8588 (JP)
(72) Inventor: LI, Guorong, Beijing 100022 (CN); ZHU, Jing, Beijing 100022 (CN); HAN, Chao, Beijing 100022 (CN); ZHANG, Lei, Beijing 100022 (CN)
(74) Representative: Haseltine Lake Kempner LLP
(86) International application number: PCT/CN2024/073074
(87) International publication number: WO 2025/152118

(57) **Abstract**

The present application provides a data transmission method and apparatus, a data reception method and apparatus, and a communication system. The data transmission method includes: transmitting first indication information to a network device, wherein the first indication information is used for indicating that the terminal equipment supports a secondary cell operation of an on-demand synchronization signal block or that the terminal equipment does not support the secondary cell operation of the on-demand synchronization signal block.

## Description

### TECHNICAL FIELD

Embodiments of the present application relate to the field of wireless communications technologies.

### BACKGROUND

In a standardized 5th Generation Mobile Communication Technology (5G) network of the 3rd Generation Partnership Project (3GPP), a large number of NR (New Radio) base stations have been deployed. NR base stations need to operate in large bandwidth (e.g., 100 MHz), require a large number of ports (64T/64R) and a shorter TTI (1 ms). An energy consumption overhead of NR base stations in functions such as baseband processing, digital front-end and the like is significantly higher than that of LTE base stations.

According to telecom operator's data statistics, average energy consumption of a NR base station exceeds three times that of an LTE base station, and nearly 50% of cost of deploying 5G networks for the telecom operator is electricity expenses. More importantly, even during periods without service traffic, the energy consumption of the NR base station is still quite high, because even when there is no service traffic, the NR base station still needs to transmit common signals such as Synchronization Signal Block (SSB), System Information Block (SIB, such as SIB1), and System Information (SI), etc., thus greatly reducing energy efficiency of the NR base station. Energy saving in NR networks is an urgent problem that needs to be addressed. In addition, network energy saving also needs to be addressed in future networks (such as 6G or more advanced networks).

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that a cell configured as a Secondary Cell (SCell) for User Equipment (UE), or a base station where the SCell is located, may determine transmission of an SSB as required. That is to say, the SCell may adopt an operation of on-demand SSB transmission to save network energy consumption or power consumption. A network device may configure SCells with on-demand SSB transmission or configure which SCells have on-demand SSB transmission for the UE. However, if the network device does not know whether the UE supports operation of SCell on-demand SSB, a network's configuration for the UE may possibly be inconsistent with capability of the UE, resulting in incorrect or invalid configuration. Therefore, a network needs to know whether the UE supports an operation of SCell on-demand SSB, but currently no solution has been proposed yet for how the network knows whether the UE supports the operation of SCell on-demand SSB.

And, for an SCell with or supporting on-demand SSB, the SSB enables the UE to detect or measure the SCell. If the UE still performs a procedure related to SSB reception in a case where the SCell does not transmit an SSB, the detection or measurement results for the SCell obtained by the UE may be inaccurate, and the UE may even initiate a corresponding failure procedure due to failure to receive the SSB, occupying wireless resources and also increasing power consumption of the UE. Therefore, whether and how the UE needs to know whether one SCell is currently transmitting an on-demand SSB is a question that needs further discussion.

In addition, if the UE does not know which SCell has or supports on-demand SSB transmission, it may not be able to perform a corresponding operation, which may possibly result in the UE failing to perform time-frequency synchronization on the SCell or obtaining inaccurate measurement results. Therefore, whether and how the UE knows which SCell has or supports on-demand SSB transmission is also a problem that needs to be addressed.

In order to solve at least one of the above problems or other similar problems, embodiments of the present application provide a data transmission method and apparatus, a data reception method and apparatus, and a communication system.

According to an aspect of the embodiments of the present application, there is provided with a data transmission apparatus applied to a terminal equipment, the data transmission apparatus including:
a first transmitting unit configured to transmit first indication information to a network device,
wherein the first indication information is used for indicating that the terminal equipment supports a secondary cell operation of an on-demand synchronization signal block or that the terminal equipment does not support the secondary cell operation of the on-demand synchronization signal block.

According to another aspect of the embodiments of the present application, there is provided with a data reception apparatus applied to a terminal equipment, the data reception apparatus including:
a first receiving unit configured to receive second indication information transmitted by a network device,
wherein the second indication information is used to indicate whether a secondary cell is transmitting related information of a synchronization signal block (SSB), and/or whether the terminal equipment needs to receive or detect or measure the synchronization signal block in the secondary cell.

According to another aspect of the embodiments of the present application, there is provided with a data reception apparatus applied to a terminal equipment, the data reception apparatus including:
a third receiving unit configured to receive third indication information related to whether to support a secondary cell (SCell) operation of an on-demand SSB, transmitted by a network device,
wherein the operation related to the secondary cell is performed according to the third indication information.

According to another aspect of the embodiments of the present application, there is provided with a data transmission method applied to a terminal equipment, the data transmission method including:
transmitting first indication information to a network device,
wherein the first indication information is used for indicating that the terminal equipment supports a secondary cell operation of an on-demand synchronization signal block or that the terminal equipment does not support the secondary cell operation of the on-demand synchronization signal block.

According to another aspect of the embodiments of the present application, there is provided with a data reception method applied to a terminal equipment, the data reception method including:
receiving second indication information transmitted by a network device,
wherein the second indication information is used to indicate whether a secondary cell is transmitting related information of a synchronization signal block (SSB), and/or whether the terminal equipment needs to receive or detect or measure the synchronization signal block in the secondary cell.

According to another aspect of the embodiments of the present application, there is provided with a data reception method applied to a terminal equipment, the data reception method including:
receiving third indication information related to whether to support a secondary cell (SCell) operation of an on-demand SSB, transmitted by a network device; and
performing the operation related to the secondary cell according to the third indication information.

According to another aspect of the embodiments of the present application, there is provided with a data reception apparatus applied to a network device, the data reception apparatus including:
a second receiving unit configured to receive first indication information transmitted by a terminal equipment, wherein the first indication information is used for indicating that the terminal equipment supports a secondary cell operation of an on-demand synchronization signal block or that the terminal equipment does not support the secondary cell operation of the on-demand synchronization signal block.

According to another aspect of the embodiments of the present application, there is provided with a data transmission apparatus applied to a network device, the data transmission apparatus including:
a third transmitting unit configured to transmit second indication information to a terminal equipment, wherein the second indication information is used to indicate whether a secondary cell is transmitting related information of a synchronization signal block (SSB), and/or whether the terminal equipment needs to receive or detect or measure the synchronization signal block in the secondary cell.

According to another aspect of the embodiments of the present application, there is provided with a data transmission apparatus applied to a network device, the data transmission apparatus including:
a fourth transmitting unit configured to transmit third indication information related to whether to support a secondary cell (SCell) operation of an on-demand SSB to a terminal equipment, so that the terminal equipment performs the operation related to the secondary cell according to the third indication information.

According to another aspect of the embodiments of the present application, there is provided with a data reception method applied to a network device, the data reception method including:
receiving first indication information transmitted by a terminal equipment, wherein the first indication information is used for indicating that the terminal equipment supports a secondary cell operation of an on-demand synchronization signal block or that the terminal equipment does not support the secondary cell operation of the on-demand synchronization signal block.

According to another aspect of the embodiments of the present application, there is provided with a data transmission method applied to a network device, the data transmission method including:
transmitting second indication information to a terminal equipment, wherein the second indication information is used to indicate whether a secondary cell is transmitting related information of a synchronization signal block (SSB), and/or whether the terminal equipment needs to receive or detect or measure the synchronization signal block in the secondary cell.

According to another aspect of the embodiments of the present application, there is provided with a data transmission method applied to a network device, the data transmission method including:
transmitting third indication information related to whether to support a secondary cell (SCell) operation of an on-demand SSB to a terminal equipment, so that the terminal equipment performs the operation related to the secondary cell according to the third indication information.

According to another aspect of the embodiments of the present application, there is provided with a terminal equipment including a memory storing a computer program and a processor configured to execute the computer program to implement the above-mentioned data transmission method and/or data reception method on the terminal equipment side.

According to another aspect of the embodiments of the present application, there is provided with a network device including a memory storing a computer program and a processor configured to execute the computer program to implement the above-mentioned data transmission method and/or data reception method on the network device side.

According to another aspect of the embodiments of the present application, there is provided with a communication system, including:
a terminal equipment configured to execute the above-mentioned data transmission method and/or data reception method on the terminal equipment side; and
a network device configured to execute the above-mentioned data transmission method and/or data reception method on the network device side.

The beneficial effects of the embodiments of the present application include:
a terminal equipment may transmit indication information indicating the terminal equipment supports or does not support a secondary cell operation of an on-demand synchronization signal block to a network device, thereby to enable the network device to know UE capability and to help the network device to determine whether to configure a secondary cell (SCell) with on-demand synchronization signal block (SSB) transmission or configure which SCells have on-demand SSB transmission for the UE, thereby enabling the network device to perform configuration consistent with the UE capability, avoiding incorrect or invalid configuration caused by inconsistency between the network configuration and the UE capability, and solving one of the above problems existing in the related prior art.

Moreover, the terminal equipment receives related information indicating whether the secondary cell is transmitting a synchronization signal block (SSB) transmitted by the network device and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB, thus solving one of the above problems existing in the related art.

In addition, the terminal equipment receives indication information related to whether to support the SCell operation of an on-demand synchronization signal block (SSB) transmitted by the network device. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

With reference to the specification and drawings below, a specific embodiment of the present application is disclosed in detail, which specifies the manner in which the principle of the present application can be adopted. It should be understood that, the scope of the embodiment of the present application is not limited. Within the scope of the clause of the appended claims, embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

The drawings are included to provide further understanding of the embodiments of the present application, which constitute a part of the specification and illustrate the embodiments of the present application, and are used for setting forth the principles of the present application together with the text description. Obviously, the drawings described below are merely some embodiments of the present application, persons ordinarily skilled in the art may also obtain other drawings according to these drawings without making creative efforts. In the drawings:
FIG. 1 is a schematic diagram of a communication system in embodiments of the present application;
FIG. 2 is a schematic diagram of a data transmission method in embodiments of the present application;
FIG. 3 is a schematic diagram of a data reception method in embodiments of the present application;
FIG. 4 is another schematic diagram of a data reception method in embodiments of the present application;
FIG. 5 is another schematic diagram of a data reception method in embodiments of the present application;
FIG. 6 is another schematic diagram of a data transmission method in embodiments of the present application;
FIG. 7 is another schematic diagram of a data reception method in embodiments of the present application;
FIG. 8 is a schematic diagram of a data transmission apparatus in embodiments of the present application;
FIG. 9 is a schematic diagram of a data reception apparatus in embodiments of the present application;
FIG. 10 is another schematic diagram of a data reception apparatus in embodiments of the present application;
FIG. 11 is another schematic diagram of a data reception apparatus in embodiments of the present application;
FIG. 12 is another schematic diagram of a data transmission apparatus in embodiments of the present application;
FIG. 13 is another schematic diagram of a data transmission apparatus in embodiments of the present application;
FIG. 14 is a schematic diagram of composition of a terminal equipment in embodiments of the present application;
FIG. 15 is a schematic diagram of composition of a network device in embodiments of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims. The various embodiments of the present application are illustrated below with reference to the accompanying drawings. These embodiments are exemplary only and are not limitations to the present application.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and future 5G, New Radio (NR), 6G or future communication and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), 6G and more advanced base stations, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" may refer to a base station and/or its coverage area, depending on the context in which the term is used.

In embodiments of the present application, the term "user equipment" (UE) or "terminal equipment" (TE) refers, for example, to a device that is connected to the communication network through the network device and receives network services. The user equipment may be fixed or movable, and may also be called a mobile station (MS), a terminal, a subscriber station (SS), an access terminal (AT), a station, etc.

The user equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the user equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, a terminal supporting sidelink communication, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

In embodiments of the present application, "has", "configured", "uses", and "supports" may be used interchangeably. "Not have", "Not configured", "Not used", "Not support" may be used interchangeably.

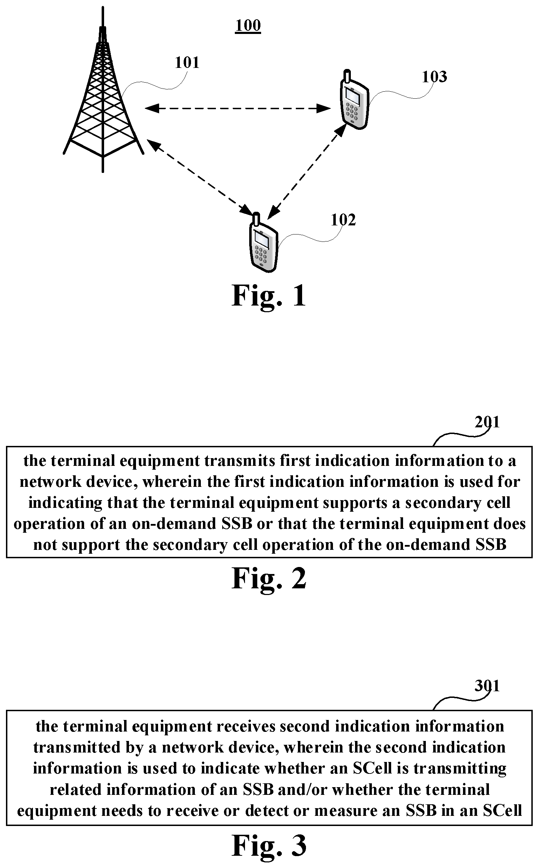

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), Ultra-Reliable and Low-Latency Communication (URLLC), and communications related to reduced-capability terminal equipments, etc.

It is worth noting that FIG. 1 shows that two terminal equipments 102 and 103 are within a coverage of the network device 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In 3GPP Rel-15/16, in a scenario of intra-band Carrier Aggregation (CA), a secondary cell (SCell) of a UE may not transmit an SSB. The secondary cell is referred to as an SSB-less SCell. The timing reference of the SSB-less SCell comes from a Special Cell (SpCell) or other SCells operating in the same frequency band as the SSB-less SCell.

In 3GPP Rel-18, for an inter-band CA SSB-less SCell, a network configures a serving cell index (ServCellIndex) of a reference cell of the SSB-less SCell, and this index is included in FrequencyInfoDL IE of the SSB-less SCell. This reference cell provides timing reference and Automatic Gain Control (AGC) source for the SSB-less SCell. If the reference cell is an SCell or a Primary Secondary Cell (PSCell), it should be an activated SCell or activated PSCell.

In the work of 3GPP Rel-19, there is a goal to specify procedures and signaling methods to support on-demand synchronization signal block (on-demand SSB) SCell operation for a UE in connected mode configured with CA, for both intra-/inter-band CA, and to specify a triggering method (selected from a UE uplink wake up signal using an existing signal/channel, cell on/off indication via backhaul, cell activation/deactivation signaling), and the on-demand SSB transmission may be used by the UE for at least time-frequency synchronization of the SCell, Layer 1/Layer 3 (L1/L3) measurements, and SCell activation. The standard is shown in Table 1 below:

**Table 1**

| |
|---|
| Specify procedures and signaling method(s) to support on-demand SSB SCell operation for UEs in connected mode configured with CA, for both intra-/inter-band CA. [RAN1/2/3/4] |
| • Specify triggering method(s) (select from UE uplink wake-up-signal using an existing signal/channel, cell on/off indication via backhaul, SCell activation/deactivation signaling) |
| • Note1: On-demand SSB transmission can be used by UE for at least SCell |
| time/frequency synchronization, L1/L3 measurements and SCell activation, and is supported for FR1 and FR2 in non-shared spectrum. |

The following description is given in conjunction with the embodiments.

### Embodiments of a First Aspect

The embodiments of the present application provide a data transmission method, which is explained from a terminal equipment side.

FIG. 2 is a schematic diagram of a data transmission method in embodiments of the present application, the data transmission method being applied to a terminal equipment, as shown in FIG. 2, the data transmission method including:
201: the terminal equipment transmits first indication information to a network device, wherein the first indication information is used for indicating that the terminal equipment supports a secondary cell operation of an on-demand synchronization signal block or that the terminal equipment does not support the secondary cell operation of the on-demand synchronization signal block.

According to the above embodiments, the terminal equipment may transmit indication information indicating the terminal equipment supports or does not support a secondary cell operation of an on-demand synchronization signal block to a network device, thereby to enable the network device to know UE capability and to help the network device to determine whether to configure a secondary cell (SCell) with on-demand synchronization signal block (SSB) transmission or configure which SCells have on-demand SSB transmission for the UE, thereby enabling the network device to perform configuration consistent with the UE capability, avoiding incorrect or invalid configuration caused by inconsistency between the network configuration and the UE capability, and solving one of the above problems existing in the related prior art.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In some embodiments, the first indication information is included in a UE capability information message or an RRC setup request message or an RRC setup complete message or an RRC reconfiguration complete message or a UE assistance information message. For example, the terminal equipment may actively transmit the first indication information to the network device, or may transmit the first indication information after receiving a request from the network device.

In some embodiments, a network device may pre-configure a first table or may pre-define the first table, and the first table includes a corresponding relationship between the first indication information and UE capability information on whether a UE supports a secondary cell operation of an on-demand synchronization signal block. The first indication information may be a row index of the first table or an index of the capability information, or the first indication information may be a value corresponding to the UE capability in the first table. Upon reception of the first indication information, the network device may determine the UE capability indicated by the first indication information by looking up the table.

In some embodiments, when the first indication information is included in the RRC setup request message, size of the first indication information does not exceed a preset value, for example the preset value is configured or pre-defined by the network device, for example one bit.

In some embodiments, different values of the first indication information indicate whether a terminal equipment supports an SCell operation of on-demand SSB. For example, the first indication information is one bit, and different values of this one bit indicate whether the terminal equipment supports an SCell operation of an on-demand SSB. For example, if the value of this one bit is 1, it indicates that the terminal equipment supports the secondary cell operation of the on-demand synchronization signal block; if the value of this one bit is 0, it indicates that the terminal equipment does not support the secondary cell operation of the on-demand synchronization signal block. Alternatively, if the value of this one bit is 0, it indicates that the terminal equipment supports the secondary cell operation of the on-demand synchronization signal block; if the value of this one bit is 1, it indicates that the terminal equipment does not support the secondary cell operation of the on-demand synchronization signal block.

In some embodiments, presence or absence of the first indication information indicates whether a terminal equipment supports an SCell operation of on-demand SSB. For example, the first indication information is one bit. The presence of this one bit indicates that the terminal equipment supports the secondary cell operation of the on-demand synchronization signal block, and the absence of this one bit indicates that the terminal equipment does not support the secondary cell operation of the on-demand synchronization signal block. Alternatively, if the value of this one bit is 1 or 0, it indicates that the terminal equipment supports the secondary cell operation of the on-demand synchronization signal block; if the value of this one bit is null, it indicates that the terminal equipment does not support the secondary cell operation of the on-demand synchronization signal block.

In some embodiments, the first indication information is used for indicating that a terminal equipment supports a secondary cell operation of an on-demand synchronization signal block or that the terminal equipment does not support the secondary cell operation of the on-demand synchronization signal block. At this case, the first indication information may be represented by the aforementioned one bit.

In some embodiments, the first indication information is used for indicating that a terminal equipment supports a secondary cell operation of an on-demand synchronization signal block or does not support the secondary cell operation of the on-demand synchronization signal block in at least one of the following carrier aggregation modes:
intra-band carrier aggregation (intra-band CA);
inter-band carrier aggregation (inter-band CA);
intra-band co-located carrier aggregation (intra-band co-located CA);
intra-band non co-located carrier aggregation (intra-band non co-located CA);
intra frequency range 1 (FR1) carrier aggregation;
intra frequency range 2 (FR2) carrier aggregation; or
carrier aggregation across FR1 and FR2.

Therefore, the terminal equipment indicates to the network device whether it supports or does not support the secondary cell operation of the on-demand synchronization signal block according to different carrier aggregation modes, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between the network configuration and the UE capability.

The above frequency range 1 is also referred to as sub-6 GHz frequency range, including the frequency range from 410 MHz to 7125 MHz. Frequency range 2 may be a frequency range above 6 GHz, currently including two sub frequency ranges FR2-1 and FR2-2. FR2-1 has a frequency range of 24.25 GHz to 52.6 GHz, while FR2-2 has a frequency range of 52.6 GHz to 71 GHz.

In some embodiments, the first indication information is used to indicate that a terminal equipment supports or does not support a secondary cell operation of an on-demand synchronization signal block in one carrier aggregation mode. The first indication information is, for example, one bit. Taking the carrier aggregation mode being intra-band carrier aggregation as an example, when the value of this one bit is 1, it indicates that the terminal equipment supports the secondary cell operation of the on-demand synchronization signal block under the intra-band carrier aggregation; when the value of this one bit is 0, it indicates that the terminal equipment does not support the secondary cell operation of the on-demand synchronization signal block under the intra-band carrier aggregation. Alternatively, when the value of this one bit is 0, it indicates that the terminal equipment supports the secondary cell operation of the on-demand synchronization signal block under the intra-band carrier aggregation; when the value of this one bit is 1, it indicates that the terminal equipment does not support the secondary cell operation of the on-demand synchronization signal block under the intra-band carrier aggregation. Alternatively, the presence of this one bit indicates that the terminal equipment supports the secondary cell operation of the on-demand synchronization signal block under the intra-band carrier aggregation; the absence of this one bit indicates that the terminal equipment does not support the secondary cell operation of the on-demand synchronization signal block under the intra-band carrier aggregation. Alternatively, when the value of this one bit is 1 or 0, it indicates that the terminal equipment supports the secondary cell operation of the on-demand synchronization signal block under the intra-band carrier aggregation; when the value of this one bit is null, it indicates that the terminal equipment does not support the secondary cell operation of the on-demand synchronization signal block under the intra-band carrier aggregation. Similarly to the case where the first indication information using one bit is used to indicate that the terminal equipment supports or does not support the secondary cell operation of the on-demand synchronization signal block in other carrier aggregation modes, the description will not be repeated here.

In some embodiments, a terminal equipment uses respective first indication information for the above at least one carrier aggregation mode, that is, uses different first indication information for different carrier aggregation modes.

In some embodiments, when the first indication information is used to indicate that a terminal equipment supports or does not support a secondary cell operation of an on-demand synchronization signal block under one carrier aggregation mode, this one carrier aggregation mode is configured by a network or pre-defined by the terminal equipment.

In some embodiments, the first indication information is used to indicate that a terminal equipment supports or does not support a secondary cell operation of an on-demand synchronization signal block for more than one carrier aggregation mode. For example, the first indication information is a bitmap, and a length of the bitmap may be, for example, less than or equal to 8 bits, wherein each bit in the bitmap indicates that the terminal equipment supports or does not support the secondary cell operation of the on-demand synchronization signal block for one of the above-mentioned more than one carrier aggregation mode. For example, taking the following content as an example, i.e., the first indication information is used to indicate whether the terminal equipment supports the secondary cell operation of the on-demand synchronization signal block in the intra-band carrier aggregation mode and the inter-band carrier aggregation mode, the value of one bit in the bitmap being set to 1 indicates supporting the secondary cell operation of the on-demand synchronization signal block, and the value of 0 indicates not supporting the secondary cell operation of the on-demand synchronization signal block, when the first indication information is "11", it indicates that the terminal equipment supports the secondary cell operation of the on-demand synchronization signal block in both the intra-band carrier aggregation mode and the inter-band carrier aggregation mode; when the first indication information is "00", it indicates that the terminal equipment does not support the secondary cell operation of the on-demand synchronization signal block in both the intra-band carrier aggregation mode or the inter-band carrier aggregation mode; when the first indication information is "10", it indicates that the terminal equipment supports the secondary cell operation of the on-demand synchronization signal block in the intra-band carrier aggregation mode, and does not support the secondary cell operation of the on-demand synchronization signal block in the inter-band carrier aggregation mode; and when the first indication information is "01", it indicates that the terminal equipment does not support the secondary cell operation of the on-demand synchronization signal block in the intra-band carrier aggregation mode, and supports the secondary cell operation of the on-demand synchronization signal block in the inter-band carrier aggregation mode.

In some embodiments, when the first indication information is used to indicate that a terminal equipment supports or does not support a secondary cell operation of an on-demand synchronization signal block under more than one carrier aggregation mode, the more than one carrier aggregation mode and an order of bits corresponding to the more than one carrier aggregation mode in the first indication information are configured by the network or pre-defined by the terminal equipment.

In some embodiments, different values of the first indication information may indicate that a terminal equipment supports or does not support a secondary cell operation of an on-demand synchronization signal block for more than one carrier aggregation mode. For example, the first indication information may be 3 bits with a value ranging from 0 to 7, wherein when the value of the first indication information is 0, it indicates that the secondary cell operation of the on-demand synchronization signal block is not supported for the aforementioned carrier aggregation mode; when the value of the first indication information is 1, it indicates that the secondary cell operation of the on-demand synchronization signal block is supported for the intra-band aggregation mode; when the value of the first indication information is 2, it indicates that the secondary cell operation of the on-demand synchronization signal block is supported for the inter-band aggregation mode; when the value of the first indication information is 3, it indicates that the secondary cell operation of the on-demand synchronization signal block is supported for the intra-band co-located carrier aggregation mode, and so on.

In some embodiments, the first indication information is used to indicate that a terminal equipment supports or does not support a secondary cell operation of an on-demand synchronization signal block in one or more than one frequency band or band combination supported by carrier aggregation.

Therefore, a terminal equipment indicates to a network device whether it supports or does not support a secondary cell operation of an on-demand synchronization signal block according to different bands or band combinations, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between a network configuration and UE capability.

In some embodiments, the first indication information indicates that a terminal equipment supports or does not support a secondary cell operation of an on-demand synchronization signal block for one frequency band or band combination supported by carrier aggregation. For example, the first indication information is one bit. The relationship between the value of this one bit and that the terminal equipment supports or does not support the secondary cell operation of the on-demand synchronization signal block in this frequency band or band combination may be found by referring to the previous text, and will not be repeated here.

In some embodiments, when the first indication information indicates that a terminal equipment supports or does not support a secondary cell operation of an on-demand synchronization signal block for one frequency band or band combination supported by carrier aggregation, this one frequency band or band combination is configured by a network or pre-defined by the terminal equipment.

In some embodiments, a terminal equipment uses respective first indication information for one frequency band or band combination supported by carrier aggregation, that is, uses different first indication information for different frequency bands or band combinations.

In some embodiments, the first indication information respectively indicates that a terminal equipment supports or does not support a secondary cell operation of an on-demand synchronization signal block in each frequency band or band combination supported by carrier aggregation. For example, the terminal equipment may separately indicate first indication information for each frequency band or band combination, and the first indication information may be one bit. Alternatively, the first indication information is a bitmap, each bit in the bitmap respectively indicates that the terminal equipment supports or does not support the secondary cell operation of the on-demand synchronization signal block for one frequency band or band combination supported by carrier aggregation, and the relationship between the value of each bit in the bitmap and that the terminal equipment supports or does not support the secondary cell operation of the on-demand synchronization signal block for a corresponding frequency band or band combination may be found by referring to the previous text, and will not be repeated here.

In some embodiments, when the first indication information indicates that a terminal equipment supports or does not support a secondary cell operation of an on-demand synchronization signal block for more than one frequency band or band combination supported by carrier aggregation, the more than one frequency band or band combination and an order of bits corresponding to the more than one frequency band or band combination in the first indication information are configured by a network or pre-defined by the terminal equipment.

In some embodiments, different values of the first indication information may indicate that a terminal equipment supports or does not support a secondary cell operation of an on-demand synchronization signal block for more than one frequency band or band combination supported by carrier aggregation. For example, the first indication information may be 3 bits with a value ranging from 0 to 7, wherein when the value of the first indication information is 0, it indicates that the terminal equipment does not support the secondary cell operation of the on-demand synchronization signal block for the aforementioned more than one frequency band or band combination of carrier aggregation; when the value of the first indication information is 1, it indicates that the terminal equipment supports the secondary cell operation of the on-demand synchronization signal block for the first one frequency band or band combination of carrier aggregation; when the value of the first indication information is 2, it indicates that the terminal equipment supports the secondary cell operation of the on-demand synchronization signal block for the second one frequency band or band combination of carrier aggregation; when the value of the first indication information is 3, it indicates that the terminal equipment supports the secondary cell operation of the on-demand synchronization signal block for the third one frequency band or band combination of carrier aggregation, and so on.

It can be seen from the above embodiments that, in the data transmission method according to the embodiments of the present application, a terminal equipment may transmit indication information indicating the terminal equipment supports or does not support a secondary cell operation of an on-demand synchronization signal block to a network device, thereby to enable the network device to know UE capability and to help the network device to determine whether to configure a secondary cell (SCell) with on-demand synchronization signal block (SSB) transmission or configure which SCells have on-demand SSB transmission for the UE, thereby enabling the network device to perform configuration consistent with the UE capability, avoiding incorrect or invalid configuration caused by inconsistency between the network configuration and the UE capability, and solving one of the above problems existing in the related prior art.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Second Aspect

The embodiments of the present application provide a data reception method, which is explained from a terminal equipment side.

FIG. 3 is a schematic diagram of a data reception method in embodiments of the present application, the data reception method being applied to a terminal equipment, as shown in FIG. 3, the data reception method including:
301: the terminal equipment receives second indication information transmitted by a network device, wherein the second indication information is used to indicate whether a secondary cell (SCell) is transmitting related information of a synchronization signal block (SSB) and/or whether the terminal equipment needs to receive or detect or measure the synchronization signal block in the secondary cell.

According to the above embodiments, the terminal equipment receives related information indicating whether the secondary cell is transmitting a synchronization signal block (SSB) transmitted by the network device and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving a power of the terminal equipment, avoiding inaccurate detection or measurement results for the SCell obtained by the terminal equipment, and avoiding the UE from initiating a corresponding failure procedure due to failure to receive the SSB, reducing waste of wireless resources, and thus solving one of the above problems existing in the related art.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

In some embodiments, the second indication information is carried by RRC signaling.

In some embodiments, when the second indication information is carried by RRC signaling, the second indication information is included in a configuration of a secondary cell added or modified by a network device for a terminal equipment; alternatively, the second indication information is included in a measurement configuration configured by the network device for the terminal equipment, and this measurement configuration is, for instance, a configuration where a measurement object is frequency of the SSB of the secondary cell.

In some embodiments, the second indication information is included in downlink control information (DCI) or a medium access control control element (MAC CE).

In some embodiments, the second indication information is used to indicate whether one or more than one secondary cell is transmitting related information of a synchronization signal block (SSB), and/or whether a terminal equipment needs to receive or detect or measure the synchronization signal block in one secondary cell.

In some embodiments, different values of the second indication information indicate whether one SCell is currently transmitting an SSB, or whether a UE needs to receive or detect or measure the SSB in one SCell. For example, the second indication information is one bit, and different values of the one bit indicate whether one SCell is currently transmitting the SSB, or whether the UE needs to receive or detect or measure the SSB in one SCell. For example, when the value of the one bit is 1, it indicates that the one SCell is currently transmitting an SSB or the terminal equipment needs to receive or detect or measure the SSB in one SCell; when the value of the one bit is 0, it indicates that the one SCell is not currently transmitting an SSB or the terminal equipment does not need to receive or detect or measure the SSB in one SCell. Alternatively, when the value of the one bit is 0, it indicates that the one SCell is currently transmitting an SSB or the terminal equipment needs to receive or detect or measure the SSB in one SCell; when the value of the one bit is 1, it indicates that the one SCell is not currently transmitting an SSB or the terminal equipment does not need to receive or detect or measure the SSB in one SCell.

In some embodiments, presence or absence of the second indication information indicates whether one SCell is currently transmitting an SSB, or whether a UE needs to receive or detect or measure the SSB in one SCell. For example, the presence of the one bit indicates that the one SCell is currently transmitting an SSB or the terminal equipment needs to receive or detect or measure the SSB in one SCell; the absence of the one bit indicates that the one SCell is not currently transmitting an SSB or the terminal equipment does not need to receive or detect or measure the SSB in one SCell. Alternatively, when the value of the one bit is 1 or 0, it indicates that the one SCell is currently transmitting an SSB or the terminal equipment needs to receive or detect or measure the SSB in one SCell; when the value of the one bit is null, it indicates that the one SCell is not currently transmitting an SSB or the terminal equipment does not need to receive or detect or measure the SSB in one SCell.

In some embodiments, when the second indication information is used to indicate whether one secondary cell is transmitting related information of a synchronization signal block (SSB), and/or whether a terminal equipment needs to receive or detect or measure a synchronization signal block in one secondary cell, the one SCell is configured or indicated by a network or pre-defined by the terminal equipment.

In some embodiments, the second indication information is used to indicate whether more than one secondary cell is transmitting related information of a synchronization signal block (SSB), and/or whether a terminal equipment needs to receive or detect or measure a synchronization signal block in more than one secondary cell. For example, the second indication information is one bitmap. Different values of each bit in the bitmap indicate whether one SCell among the more than one SCell is currently transmitting an SSB, and/or whether the terminal equipment needs to receive or detect or measure the SSB in the one SCell among the more than one SCell. The relationship between the value of each bit in this bitmap and whether a corresponding one SCell is transmitting an SSB and/or whether the terminal equipment needs to receive or detect or measure the SSB in one SCell may be found by referring to the previous text, and will not be repeated here.

In some embodiments, an order of bits corresponding to more than one secondary cell in a bitmap is sorted in an ascending order according to cell indexes of the more than one secondary cell, or the order of the bits corresponding to the more than one secondary cell in the second indication information is sorted in a descending order according to cell indexes of the more than one secondary cell, or the order of the bits corresponding to the more than one secondary cell in the second indication information is configured or indicated by a network or pre-defined by the terminal equipment.

In some embodiments, when the second indication information is used to indicate whether more than one secondary cell is transmitting related information of a synchronization signal block (SSB), and/or whether a terminal equipment needs to receive or detect or measure a synchronization signal block in more than one secondary cell, the more than one secondary cell is configured or indicated by a network, and may be for example an SCell configured by the network, an SCell configured by the network for an on-demand SCell operation, or an SCell supporting an on-demand SCell operation configured by the network, or may be pre-defined by the terminal equipment.

In some embodiments, the second indication information includes configuration of a measurement object corresponding to frequency of a synchronization signal block (SSB) of a secondary cell (SCell).

If a network device configures a terminal equipment to measure frequency of an SSB of an SCell, the terminal equipment considers that the SCell is transmitting the SSB.

In some embodiments, the second indication information includes frequency information (e.g., absoluteFrequencySSB) of an SSB transmitted by an SCell and/or time information of the SSB transmitted by the SCell and/or configuration of period information of the SSB transmitted by the SCell, wherein the frequency information of the SSB may be a frequency point of the SSB, and the time information of the SSB may include time position information of SSB transmission (such as ssb-PositionsInBurst). The time position may be aligned with a time position of SSB transmission in the related art (such as Release 15~Release 18), or may be a time position outside the time position of SSB transmission in the related art. The time information of the SSB may also include time information of the SSB to be transmitted, such as a wireless frame number and/or a slot number and/or a symbol number of the SSB to be transmitted, and the period information of the SSB may include a periodicity of SSB transmission, such as 20 ms, 40 ms, 160 ms or 320 ms or the like.

If a network device configures frequency information and/or time information and/or period information of an SSB of an SCell, a terminal equipment considers that the SCell is transmitting the SSB or that the terminal equipment receives (or detects or measures) the SSB of the SCell.

In some embodiments, the second indication information is a secondary cell activation/deactivation MAC CE (SCell Activation/Deactivation MAC CE).

The bit corresponding to one SCell in the secondary cell activation/deactivation MAC CE is set to 1, indicating that the SCell is activated; the bit corresponding to one SCell in the secondary cell activation/deactivation MAC CE is set to 0, indicating that the Scell is deactivated, and vice versa. Upon reception of the secondary cell activation/deactivation MAC CE, a terminal equipment considers that the activated one secondary cell is transmitting an on-demand SSB or that the terminal equipment receives (or detects or measures) the SSB of the SCell, and/or considers that the deactivated one secondary cell is not transmitting an on-demand SSB or that the terminal equipment does not receive (or not detect or not measure) the SSB of the SCell.

In some embodiments, the second indication information includes a cell ID or a cell index of a secondary cell, as well as related information about whether the secondary cell is transmitting an on-demand SSB or whether a terminal equipment needs to receive or detect or measure the synchronization signal block in the secondary cell. The cell ID or the cell index of the secondary cell is pre-defined or configured by a network device. The related information about whether the secondary cell is transmitting an on-demand SSB or whether the terminal equipment needs to receive or detect or measure the synchronization signal block in the secondary cell is represented by, for example, one bit, and the representation manner may be seen by referring to the foregoing embodiments, which will not be repeated here.

In some embodiments, in the step 301, the secondary cell is a secondary cell configured with or supporting on-demand synchronization signal block transmission.

In some embodiments, the method further includes:
upon reception of the second indication information, the terminal equipment performs an operation related to reception or detection or measurement of the SSB in the secondary cell according to the second indication information.

In some embodiments, performing an operation related to reception or detection or measurement of the SSB in the secondary cell according to the second indication information includes:
when the second indication information is used for indicating that the secondary cell is not transmitting the synchronization signal block (SSB) and/or the terminal equipment needs to receive or detect or measure the synchronization signal block in one secondary cell, the terminal equipment initiates or transmits to the network device, an uplink signal for requesting an on-demand synchronization signal block (SSB) on the secondary cell. For example, the uplink signal may be an Uplink Wake Up Signal (WUS), and the uplink signal may be transmitted to the network device in a PCell or other activated SCells. Therefore, when the terminal equipment needs to receive the synchronization signal block of the secondary cell but the secondary cell is not transmitting the synchronization signal block, it transmits an uplink signal to the network device to cause the secondary cell to transmit an on-demand synchronization signal block, avoiding inaccurate measurement or detection results of the terminal equipment for the secondary cell, and avoiding the terminal equipment from initiating a corresponding failure procedure due to failure to receive the SSB.

In some embodiments, the uplink signal is configured by a network device for a secondary cell with or supporting on-demand synchronization signal block transmission.

In some embodiments, performing an operation related to reception or detection or measurement of the SSB in the secondary cell according to the second indication information includes:
when the second indication information is used to indicate that the secondary cell is transmitting the synchronization signal block, the terminal equipment does not initiate or not transmit an uplink signal for requesting an on-demand synchronization signal block (SSB) on the secondary cell to the network device, thereby reducing occupation of uplink wireless resources and further lowering energy consumption overhead of NR base stations.

In some embodiments, performing an operation related to reception or detection or measurement of the SSB in the secondary cell according to the second indication information includes:
when the second indication information is used for indicating that the secondary cell is not transmitting the synchronization signal block (SSB) and/or the terminal equipment does not need to receive or does not need to detect or does not need to measure the synchronization signal block in the secondary cell, the terminal equipment does not receive or not detect or not measure the SSB on the secondary cell, and/or stops receiving or stops detecting or stops measuring the SSB on the secondary cell, and/or stops beam failure detection procedure on the secondary cell. Thus, it is possible to save the power of the terminal equipment when the secondary cell does not transmit an SSB or the terminal equipment does not need to receive or does not need to detect or does not need to measure the SSB of the secondary cell, while avoiding inaccurate measurement or detection results of the terminal equipment for the secondary cell, and also avoiding the terminal equipment from initiating a corresponding failure procedure.

In some embodiments, a measurement of an SSB on a secondary cell is, for example, the measurement of layer 1 or layer 3 of the SSB, and the measurement quantity may be Reference Signal Receiving Power (RSRP) or Reference Signal Receiving Quality (RSRQ) or Signal to Interference plus Noise Ratio (SINR), etc.

In some embodiments, performing an operation related to reception or detection or measurement of the SSB in the secondary cell according to the second indication information includes:
when the second indication information is used for indicating that the secondary cell is transmitting the synchronization signal block (SSB) and/or the terminal equipment needs to receive or detect or measure the synchronization signal block in the secondary cell, the terminal equipment receives or detects or measures the SSB on the secondary cell, and for example, the terminal equipment starts to receive or detect or measure the SSB on the secondary cell upon reception of the second indication information; and/or
the terminal equipment starts to receive or detect or measure the SSB on the secondary cell after a first time period, for example, the terminal equipment starts to receive or detect or measure the SSB on the secondary cell after the first time period T1 upon reception of the second indication information, that is, when the terminal equipment receives the second indication information, it starts to receive or detect or measure the SSB on the secondary cell after the first time period T1; and/or,
the terminal equipment receives or detects or measures the SSB on the secondary cell in a second time period, and for example, the terminal equipment receives or detects or measures the SSB on the secondary cell within the second time period T2 upon reception of the second indication information. The second time period T2 is, for example, a time interval [t1, t2] after the second indication information is received, where t1 and t2 are non-negative numbers.

In some embodiments, the first time period and the second time period are configured by a network or pre-defined.

In some embodiments, the terminal equipment receives or detects or measures the SSB of the SCell according to frequency information of the SSB transmitted by the SCell and/or time information of the SSB transmitted by the SCell and/or period information of the SSB transmitted by the SCell that are included in the second indication information.

It can be seen from the above embodiments that, in the data reception method in the embodiments of the present application, a terminal equipment receives related information indicating whether a secondary cell is transmitting a synchronization signal block (SSB) transmitted by a network device and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Third Aspect

The embodiments of the present application provide a data reception method, which is explained from a terminal equipment side.

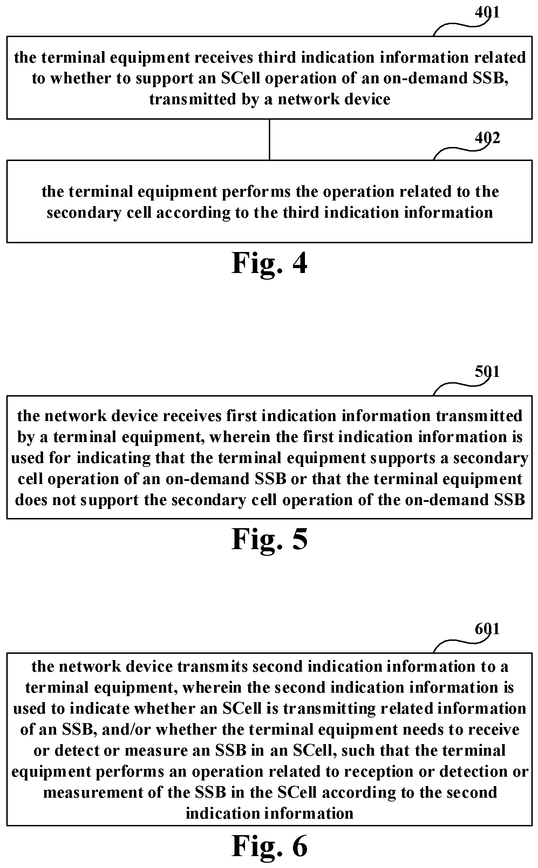

FIG. 4 is another schematic diagram of a data reception method in embodiments of the present application, the data reception method being applied to a terminal equipment, as shown in FIG. 4, the data reception method including:
401: the terminal equipment receives third indication information related to whether to support a secondary cell (SCell) operation of an on-demand SSB, transmitted by a network device; and
402: the terminal equipment performs the operation related to the secondary cell according to the third indication information.

According to the above embodiments, the terminal equipment receives indication information related to whether to support the SCell operation of an on-demand synchronization signal block (SSB) transmitted by the network device. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

It is worth noting that FIG. 4 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 4 above.

In some embodiments, in 401, the third indication information is used to indicate at least one of the following:
whether the network device supports a secondary cell (SCell) operation of an on-demand synchronization signal block (SSB); and
whether the secondary cell configured by the network device is configured with or supports on-demand SSB transmission.

In some embodiments, the third indication information is used to indicate whether the secondary cell configured by the network device is configured with or supports on-demand SSB transmission, including:
the third indication information is used to indicate whether at least one secondary cell configured by the network device is configured with or supports on-demand SSB transmission.

At this case, the third indication information indicates respectively whether each of at least one secondary cell configured by the network device is configured with or supports on-demand SSB transmission.

In some embodiments, the third indication information is included in system information of a primary cell (PCell).

In some embodiments, a network device may transmit system information containing the third indication information to a terminal equipment in a case that the network device knows UE capability (or upon reception of the first indication information in the embodiments of the first aspect of the present application), or the network device may transmit the system information containing the third indication information without knowing the UE capability. The UE capability includes a capability of the terminal equipment to support an SCell operation of an on-demand synchronization signal block (reference may also be made to the description related to the first indication information in the embodiments of the first aspect of the present application).

In some embodiments, the third indication information is carried by RRC signaling, such as an RRC reconfiguration message, an RRC resume message, etc.

In some embodiments, a network device needs to transmit RRC signaling carrying the third indication information to a terminal equipment in a case that the network device knows UE capability (or upon reception of the first indication information in the embodiments of the first aspect of the present application). That is to say, when using the RRC signaling to carry the third indication information, the network device needs to first know the UE capability (reference may also be made to the description related to the first indication information in the embodiments of the first aspect of the present application), and then transmits the RRC signaling carrying the third indication information to the UE.

In some embodiments, the method further includes:
a terminal equipment reports information on whether to support an SCell operation of an on-demand synchronization signal block (SSB) to a network device.

In some embodiments, this information is, for example, the first indication information transmitted to a network by the data transmission method described in the embodiments of the first aspect of the present application. The above content is incorporated here and will not be repeated here.

In some embodiments, the third indication information is included in information of a secondary cell added or modified by the network device for the terminal equipment.

In some embodiments, when the third indication information is used to indicate whether the network device supports a secondary cell (SCell) operation of an on-demand synchronization signal block (SSB), different values of the third indication information indicate that the network device supports or does not support the secondary cell operation of the on-demand synchronization signal block. For example, the third indication information is one bit. For example, when the value of this one bit is 1, it indicates that the network device supports the secondary cell operation of the on-demand synchronization signal block; when the value of this one bit is 0, it indicates that the network device does not support the secondary cell operation of the on-demand synchronization signal block. Alternatively, when the value of this one bit is 0, it indicates that the network device supports the secondary cell operation of the on-demand synchronization signal block; when the value of this one bit is 1, it indicates that the network device does not support the secondary cell operation of the on-demand synchronization signal block.

In some embodiments, presence or absence of the third indication information indicates whether the network device supports a secondary cell operation of an on-demand synchronization signal block. For example, the third indication information is one bit. The presence of this one bit indicates that the network device supports the secondary cell operation of the on-demand synchronization signal block; the absence of this one bit indicates that the network device does not support the secondary cell operation of the on-demand synchronization signal block. Alternatively, when the value of this one bit is 1 or 0, it indicates that the network device supports the secondary cell operation of the on-demand synchronization signal block; when the value of this one bit is null, it indicates that the network device does not support the secondary cell operation of the on-demand synchronization signal block.

In some embodiments, when the third indication information is used to indicate whether one secondary cell configured by the network device is configured with or supports on-demand SSB transmission, different values of the third indication information indicate that the configured SCell supports or does not support the secondary cell operation of the on-demand synchronization signal block. For example, the third indication information is one bit. When the value of this one bit is 1, it indicates that one secondary cell configured by the network device is configured with or supports on-demand synchronization signal block (SSB) transmission; when the value of this one bit is 0, it indicates that one secondary cell configured by the network device is not configured with or does not support the on-demand SSB transmission. Alternatively, when the value of this one bit is 0, it indicates that one secondary cell configured by the network device is configured with or supports the on-demand SSB transmission; when the value of this one bit is 1, it indicates that one secondary cell configured by the network device is not configured with or does not support the on-demand SSB transmission.

In some embodiments, presence or absence of the third indication information indicates whether the configured SCell is configured with or supports a secondary cell operation of an on-demand synchronization signal block. For example, the third indication information is one bit. The presence of this one bit indicates that one secondary cell configured by the network device is configured with or supports on-demand synchronization signal block (SSB) transmission; the absence of this one bit indicates that one secondary cell configured by the network device is not configured with or does not support the on-demand SSB transmission. Alternatively, when the value of this one bit is 1 or 0, it indicates that one secondary cell configured by the network device is configured with or supports the on-demand SSB transmission; when the value of this one bit is null, it indicates that one secondary cell configured by the network device is not configured with or does not support the on-demand SSB transmission.

In some embodiments, the third indication information is used to indicate whether more than one secondary cell configured by the network device is configured with or supports on-demand SSB transmission. For example, the third indication information is one bitmap, and each bit in the bitmap represents whether one of the more than one secondary cell configured by the network device is configured with or supports on-demand synchronization signal block (SSB) transmission, wherein the relationship between the value of each bit in the bitmap and whether one corresponding secondary cell is configured with or supports the on-demand SSB transmission may be found in the previous text, and will not be repeated here.

In some embodiments, at least one secondary cell configured by the network device includes at least one secondary cell added or modified by the network device for the terminal equipment. Correspondingly, the third indication information is used to indicate whether one secondary cell added or modified by the network device for the terminal equipment is configured with or supports the on-demand SSB transmission. For example, the third indication information is one bit, and different values of the third indication information indicate whether one secondary cell added or modified by the network device for the terminal equipment is configured with or supports the on-demand SSB transmission; alternatively, the presence or absence of the third indication information indicates whether the added or modified one secondary cell is configured with or supports the secondary cell operation of the on-demand synchronization signal block, and here reference may be made to the related contents of the foregoing embodiments.

Alternatively, the third indication information is used to indicate whether more than one secondary cell added or modified by the network device for the terminal equipment is configured with or supports the on-demand SSB transmission. For example, the third indication information is one bitmap. This bitmap indicates that more than one secondary cell added or modified by the network device for the terminal equipment supports or does not support the on-demand SSB transmission, and each bit in the bitmap indicates whether one of the more than one secondary cells added or modified by the network device for the terminal equipment is configured with or supports the on-demand SSB transmission, wherein the correspondence between the value of this one bit and whether a corresponding one of the more than one secondary cell added or modified is configured with or supports the on-demand SSB transmission may be found by referring to the previous text, and will not be repeated here.

In some embodiments, when the third indication information is a bitmap, an order of bits corresponding to the added or modified at least one secondary cell in the bitmap is sorted in an ascending order according to cell indexes of the added or modified at least one secondary cell, or the order of the bits corresponding to the added or modified at least one secondary cell in the bitmap is sorted in a descending order according to cell indexes of the added or modified at least one secondary cell, or the order of the bits corresponding to the added or modified at least one secondary cell in the bitmap is configured or indicated by a network or pre-defined by the terminal equipment.

In some embodiments, the network device configures at least one secondary cell configured thereby.

In some embodiments, the configuration includes configuring an uplink wake up signal for the at least one secondary cell, or configuring frequency information and/or time information and/or period information of an SSB for the at least one secondary cell.

In some embodiments, the third indication information includes information that the network device configures an uplink signal (e.g., Wake Up Signal, WUS) for the at least one secondary cell, and the description of the uplink signal may be found by referring to the second aspect of the present application.

When the terminal equipment receives information that the network device configures an uplink wake up signal for one secondary cell, the terminal equipment considers that the one secondary cell supports an on-demand SSB transmission.

In some embodiments, the third indication information includes information that the network device configures frequency information and/or time information and/or period information of an SSB for the at least one secondary cell. The related description of the frequency information and/or the time information and/or the period information of the SSB may be found by referring to the embodiments of the second aspect of the present application.

When the terminal equipment receives the information that the network device configures frequency information and/or time information and/or period information of an SSB for one secondary cell, the terminal equipment considers that the one secondary cell supports an on-demand SSB transmission.

In some embodiments, in step 402, performing the operation related to the secondary cell according to the third indication information includes:
the third indication information is used to indicate that in a case where the network device supports a secondary cell (SCell) operation of an on-demand synchronization signal block (SSB), the terminal equipment considers/determines that a cell of the network device is a low-priority cell or a high-priority cell during a cell selection or cell reselection or handover procedure, and for example, in a case where the terminal equipment may possibly have high-data-volume services or delay-sensitive services, the terminal equipment considers that the cell of the network device is at a low priority, and in a case where the terminal equipment may possibly have low-rate services or delay-insensitive services, the terminal equipment considers that the cell of the network device is at a high priority;
alternatively, the third indication information is used to indicate that in a case where the network device supports a secondary cell (SCell) operation of an on-demand synchronization signal block (SSB), the terminal equipment considers/determines that a cell of the network device is a high-priority cell or a low-priority cell during a cell selection or cell reselection or handover procedure, and for example, in a case where the terminal equipment may possibly have high-data-volume services or delay-sensitive services, the terminal equipment considers that the cell of the network device is at a high priority, and in a case where the terminal equipment may possibly have low-rate services or delay-insensitive services, the terminal equipment considers that the cell of the network device is at a low priority.

In some embodiments, the handover procedure may be, for example, a conditional handover procedure or a conditional LTM procedure.

In some embodiments, if a cell of the network device is determined to be a low-priority cell, a terminal equipment does not preferentially select the cell of the network device as a primary cell during a cell selection or reselection or handover procedure, or excludes the cell of the network device from candidate cells; and if the cell of the network device is determined to be a high-priority cell, the terminal equipment preferentially selects the cell of the network device as a primary cell during a cell selection or reselection or handover procedure.

In some embodiments, in step 402, performing the operation related to the secondary cell according to the third indication information includes:
the third indication information is used to indicate that in a case where one secondary cell configured or added or modified by the network device is configured with or supports the on-demand synchronization signal block (SSB) transmission, the terminal equipment applies a reception method and/or a time-frequency synchronization method and/or a measurement method and/or an activation method corresponding to an on-demand synchronization signal block (SSB) to the secondary cell, or the terminal equipment does not perform reception or time-frequency synchronization or measurement or activation of the on-demand SSB of the secondary cell.

In some embodiments, in a case where one secondary cell configured or added or modified by the network device is configured with or supports the on-demand synchronization signal block (SSB) transmission, the network device transmits information indicating whether the secondary cell is transmitting an SSB, or information indicating whether the terminal equipment needs to receive or detect or measure the secondary cell, and/or configures at least one of time-frequency synchronization information, measurement information or activation information of the secondary cell.

In some embodiments, a terminal equipment applies a reception method corresponding to an on-demand synchronization signal block (SSB) to the secondary cell, including: according to information indicating whether the secondary cell is transmitting an SSB or information indicating whether the terminal equipment needs to receive the secondary cell, transmitted by the network device, receiving the SSB of the secondary cell; or applying performance requirements related to reception of the on-demand SSB (such as time duration for SSB reception, period of SSB reception, and requirement for number of times receiving the SSB, etc.); or temporarily not receiving the SSB of the secondary cell.

In some embodiments, the information indicating whether the secondary cell is transmitting an SSB or the information indicating whether the terminal equipment needs to receive or detect or measure the secondary cell that is transmitted by the network device may be, for example, the second indication information in the embodiments of the second aspect of the present application. The foregoing contents related to the second indication information are incorporated herein, and will not be repeated here.

In some embodiments, when the second indication information is carried by RRC signaling and the third indication information is also carried by RRC signaling, the second indication information and the third indication information may be two different information elements (IE), or the second indication information and the third indication information may be implemented by different values of the same IE in RRC messages.

In some embodiments, time-frequency synchronization information of a secondary cell includes, for example, at least one of frequency information, time information, or period information of an on-demand synchronization signal block (SSB).

In some embodiments, a terminal equipment applies a time-frequency synchronization method corresponding to an on-demand synchronization signal block (SSB) to a secondary cell, including: performing a time-frequency synchronization operation with the secondary cell according to the configured time-frequency synchronization information of the secondary cell; or applying time-frequency synchronization performance requirements related to an on-demand SSB (such as time duration for SSB detection, periodicity of SSB detection, and requirement for number of times of SSB detection, etc.); or temporarily refraining from performing the time-frequency synchronization operation for the secondary cell that is configured with or supports the on-demand SSB transmission.

In some embodiments, measurement information of a secondary cell includes, for example, at least one of frequency information, time information (such as SSB Measurement Timing Configuration, SMTC), or threshold information for the on-demand SSB of the secondary cell.

In some embodiments, a terminal equipment applies a measurement method corresponding to an on-demand synchronization signal block (SSB) to a secondary cell, including: performing measurement on the secondary cell according to the configured measurement information of the secondary cell; or applying performance requirements related to measurement of an on-demand SSB (such as time duration for SSB measurement, periodicity of SSB measurement, and requirement for number of times of SSB measurement, etc.); or temporarily refraining from performing the measurement for the secondary cell that is configured with or supports the on-demand SSB transmission.

In some embodiments, activation information of a secondary cell includes, for example, a timing requirement for activation of the secondary cell.

In some embodiments, a terminal equipment applies an activation method corresponding to an on-demand synchronization signal block (SSB) to a secondary cell, including: performing activation on the secondary cell according to the configured activation information of the secondary cell; or applying performance requirements related to detection of an on-demand SSB prior to activation of the SCell (such as time duration for SSB detection, periodicity of SSB detection, and requirement for number of times of SSB detection, etc.); or temporarily refraining from performing the activation for the secondary cell that is configured with or supports the on-demand SSB transmission.

In some embodiments, timing requirement for activation of a secondary cell that is configured with or supports an on-demand SSB transmission is more relaxed than the timing requirement for activation of the secondary cell that is not configured with or does not support the on-demand SSB transmission, that is, the time or delay for activation of the secondary cell that is configured with or supports the on-demand SSB transmission may be longer. For example, the activation time of a secondary cell that is not configured with or does not support the on-demand SSB transmission is 8 ms, while the activation time of a secondary cell that is configured with or supports the on-demand SSB transmission may be longer than 8 ms.

In some embodiments, in step 402, performing the operation related to the secondary cell according to the third indication information includes:
the third indication information is used to indicate that in a case where one secondary cell configured or added or modified by the network device is not configured with or does not support an on-demand synchronization signal block (SSB) transmission, the terminal equipment applies a reception method or a time-frequency synchronization method or a measurement method or an activation method corresponding to the synchronization signal block (SSB) to the secondary cell.

In some embodiments, in a case where one secondary cell configured or added or modified by the network device is not configured with or does not support an on-demand synchronization signal block (SSB) transmission, the network device configures the secondary cell to transmit the SSB according to an existing transmission manner. The network device configures at least one of time-frequency synchronization information, measurement information or activation information of an existing synchronization signal block for the secondary cell. The time-frequency synchronization information, the measurement information and the activation information of the existing synchronization signal block are similar to those in the previous embodiments.

In some embodiments, a terminal equipment applies a reception method or a time-frequency synchronization method or a measurement method or an activation method corresponding to a synchronization signal block (SSB) to the secondary cell, including:
the terminal equipment performs time-frequency synchronization or measurement or activation on the secondary cell according to the configured time-frequency synchronization information and/or measurement information and/or activation information of the synchronization signal block (SSB).

It can be seen from the above embodiments that, in the data reception method in the embodiments of the present application, a terminal equipment receives indication information related to whether to support an SCell operation of an on-demand synchronization signal block (SSB) transmitted by a network device. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Fourth Aspect

The embodiments of the present application provide a data reception method, which is explained from a network device side.

FIG. 5 is another schematic diagram of a data reception method in embodiments of the present application, the data reception method being applied to a network device, as shown in FIG. 5, the data reception method including:
501: the network device receives first indication information transmitted by a terminal equipment, wherein the first indication information is used for indicating that the terminal equipment supports a secondary cell operation of an on-demand synchronization signal block or that the terminal equipment does not support the secondary cell operation of the on-demand synchronization signal block.

According to the above embodiments, the network device receives indication information indicating the terminal equipment supports or does not support a secondary cell operation of an on-demand synchronization signal block from the terminal equipment, thereby being able to cause the network device to know UE capability and to help the network device to determine whether to configure a secondary cell (SCell) with on-demand synchronization signal block (SSB) transmission or configure which SCells have on-demand SSB transmission for the UE, thereby performing configuration in consistent with the UE capability, avoiding incorrect or invalid configuration caused by inconsistency between the network configuration and the UE capability, and solving one of the above problems existing in the related art.

It is worth noting that FIG. 5 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 5 above.

In some embodiments, the first indication information is included in a UE capability information message or an RRC setup request message or an RRC setup complete message or an RRC reconfiguration complete message or a UE assistance information message. For example, the terminal equipment may actively transmit the first indication information to the network device, or may transmit the first indication information after receiving a request from the network device.

In some embodiments, different values of the first indication information indicate whether the terminal equipment supports the SCell operation of on-demand SSB. For example, the first indication information is one bit, and different values of this one bit indicate whether the terminal equipment supports a secondary cell operation of an on-demand synchronization signal block. The relationship between the value of this one bit and that the terminal equipment supports or does not support a secondary cell operation of an on-demand synchronization signal block may be found by referring to the embodiments of the first aspect of the present application. The above content is incorporated here and will not be repeated here.

In some embodiments, presence or absence of the first indication information indicates whether a terminal equipment supports an SCell operation of on-demand SSB. For example, the first indication information is one bit, and presence or absence of this one bit indicates whether the terminal equipment supports a secondary cell operation of an on-demand synchronization signal block. The relationship between the presence or absence of this one bit and that the terminal equipment supports or does not support a secondary cell operation of an on-demand synchronization signal block may be found by referring to the embodiments of the first aspect of the present application. The above content is incorporated here and will not be repeated here.

In some embodiments, the first indication information is used to indicate that a terminal equipment supports or does not support a secondary cell operation of an on-demand synchronization signal block in at least one of the following carrier aggregation modes:
intra-band carrier aggregation (intra-band CA);
inter-band carrier aggregation (inter-band CA);
intra-band co-located carrier aggregation (intra-band co-located CA);
intra-band non co-located carrier aggregation (intra-band non co-located CA);
intra frequency range 1 (FR1) carrier aggregation;
intra frequency range 2 (FR2) carrier aggregation; or
carrier aggregation across FR1 and FR2.

Therefore, the terminal equipment indicates to the network device whether it supports or does not support the secondary cell operation of the on-demand synchronization signal block according to different carrier aggregation modes, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between the network configuration and the UE capability.

In some embodiments, a terminal equipment uses respective first indication information for the above at least one carrier aggregation mode, that is, uses different first indication information for different carrier aggregation modes.

In some embodiments, the first indication information is used to indicate that a terminal equipment supports or does not support a secondary cell operation of an on-demand synchronization signal block in one carrier aggregation mode. The first indication information is, for example, one bit. The relationship between the value of this one bit and that the terminal equipment supports or does not support the secondary cell operation of the on-demand synchronization signal block in one carrier aggregation modes can be found by referring to the embodiments of the first aspect of the present application. The above content is incorporated here and will not be repeated here.

In some embodiments, the first indication information is used to indicate that a terminal equipment supports or does not support a secondary cell operation of an on-demand synchronization signal block in more than one carrier aggregation mode. The first indication information is for example a bitmap, wherein each bit in the bitmap indicates that the terminal equipment supports or does not support the secondary cell operation of the on-demand synchronization signal block in one of the above-mentioned more than one carrier aggregation mode. The relationship between the value of this one bit in the bitmap and that the terminal equipment supports or does not support the secondary cell operation of the on-demand synchronization signal block in one of the more than one carrier aggregation mode can be found by referring to the first aspect of the present application. The above content is incorporated here and will not be repeated here.

In some embodiments, the first indication information respectively indicates that a terminal equipment supports or does not support a secondary cell operation of an on-demand synchronization signal block in one or more bands or band combinations supported by carrier aggregation.

Therefore, the terminal equipment indicates to the network device whether it supports or does not support the secondary cell operation of the on-demand synchronization signal block according to different bands or band combinations, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between the network configuration and the UE capability.

In some embodiments, the first indication information indicates that a terminal equipment supports or does not support a secondary cell operation of an on-demand synchronization signal block in one frequency band or band combination supported by carrier aggregation. For example, the first indication information is one bit. The relationship between the value of this one bit and that the terminal equipment supports or does not support a secondary cell operation of an on-demand synchronization signal block in the frequency band or band combination can be found by referring to the embodiments of the first aspect of the present application. The above content is incorporated here and will not be repeated here.

In some embodiments, when the first indication information indicates that a terminal equipment supports or does not support a secondary cell operation of an on-demand synchronization signal block in more than one frequency band or band combination supported by carrier aggregation, the more than one frequency band or band combination and an order of bits corresponding to the more than one frequency band or band combination in the first indication information are configured by a network or pre-defined by the terminal equipment.

According to the above embodiments, the network device receives indication information indicating the terminal equipment supports or does not support a secondary cell operation of an on-demand synchronization signal block from the terminal equipment, thereby being able to cause the network device to know UE capability and to help the network device to determine whether to configure a secondary cell (SCell) with on-demand synchronization signal block (SSB) transmission or configure which SCells have on-demand SSB transmission for the UE, thereby performing configuration in consistent with the UE capability, avoiding incorrect or invalid configuration caused by inconsistency between the network configuration and the UE capability.

The implementation and noun definitions of this embodiment are similar to those of the embodiments in the first aspect of the present application. The above related content is incorporated here and will not be repeated here.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Fifth Aspect

The embodiments of the present application provide a data transmission method, which is explained from a network device side.

FIG. 6 is a schematic diagram of a data transmission method in embodiments of the present application, the data transmission method being applied to a network device, as shown in FIG. 6, the data transmission method including:
601: the network device transmits second indication information to a terminal equipment, wherein the second indication information is used to indicate whether a secondary cell (SCell) is transmitting related information of a synchronization signal block (SSB), and/or whether the terminal equipment needs to receive or detect or measure the synchronization signal block in the secondary cell, such that the terminal equipment performs an action related to reception or detection or measurement of the synchronization signal block (SSB) in the secondary cell based on the second indication information.

According to the above embodiments, the network device transmits related information indicating whether the secondary cell is transmitting a synchronization signal block (SSB) to the terminal equipment and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB, reducing waste of wireless resources, and thus solving one of the above problems existing in the related art.

It is worth noting that FIG. 6 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 6 above.

In some embodiments, the second indication information is carried by RRC signaling.

In some embodiments, the second indication information is included in configuration of a secondary cell added or modified by the network device for the terminal equipment, or in measurement configuration.

In some embodiments, the second indication information is included in downlink control information (DCI) or a medium access control control element (MAC CE).

In some embodiments, the second indication information is used to indicate whether one or more than one secondary cell is transmitting related information of a synchronization signal block (SSB), and/or whether the terminal equipment needs to receive or detect or measure the synchronization signal block in one secondary cell.

In some embodiments, different values of the second indication information indicate whether one SCell is currently transmitting the SSB, or whether a UE needs to receive or detect or measure the SSB in one SCell. For example, the second indication information is one bit, which is used to indicate whether one secondary cell configured by the network device for the terminal equipment is transmitting related information of an on-demand synchronization signal block, and/or whether the terminal equipment needs to receive or detect or measure the synchronization signal block in one secondary cell configured by the network device for the terminal equipment. The relationship between the value of this one bit and whether the one SCell is transmitting an SSB and/or whether the terminal equipment needs to receive or detect or measure the SSB in the one SCell can be found by referring to the embodiments in the second aspect. The above content is incorporated here and will not be repeated here.

In some embodiments, presence or absence of the second indication information indicates whether one SCell is currently transmitting an SSB, or whether a UE needs to receive or detect or measure the SSB in one SCell. The relationship between the presence or absence of this one bit and whether the one SCell is transmitting an SSB and/or whether the terminal equipment needs to receive or detect or measure the SSB in the one SCell can be found by referring to the embodiments in the second aspect. The above content is incorporated here and will not be repeated here.

In some embodiments, the second indication information is used to indicate whether more than one secondary cell is transmitting related information of a synchronization signal block (SSB), and/or whether the terminal equipment needs to receive or detect or measure the synchronization signal block in one secondary cell. For example, the second indication information is one bitmap. The relationship between the value of each bit in this bitmap and whether a corresponding one SCell is transmitting an SSB and/or whether the terminal equipment needs to receive or detect or measure the SSB in one SCell, and the order of the bits corresponding to the more than one secondary cell in the bitmap can be found by referring to the embodiments in the second aspect. The above contents are incorporated here and will not be repeated here.

In some embodiments, the second indication information includes configuration of a measurement object corresponding to frequency of the synchronization signal block (SSB) of the secondary cell (SCell).

If a network device configures a terminal equipment to measure frequency of an SSB of an SCell, the terminal equipment considers that the SCell is transmitting the SSB.

In some embodiments, the second indication information includes frequency information (e.g., absoluteFrequencySSB) of an SSB transmitted by an SCell and/or time information of the SSB transmitted by the SCell and/or configuration of period information of the SSB transmitted by the SCell.

If the network device is configured with frequency information and/or time information and/or period information of the SSB transmitted by the SCell, the terminal equipment considers that the SCell is transmitting the SSB or that the terminal equipment receives (or detects or measures) the SSB of the SCell.

In some embodiments, the second indication information is a secondary cell activation/deactivation MAC CE (SCell Activation/Deactivation MAC CE).

In some embodiments, the second indication information includes a cell ID or a cell index of a secondary cell, as well as related information about whether the secondary cell is transmitting an on-demand SSB or whether a terminal equipment needs to receive or detect or measure the synchronization signal block in the secondary cell. The cell ID or the cell index of the secondary cell is pre-defined or configured by a network device. Whether the secondary cell is transmitting an on-demand synchronization signal block (SSB) or whether the terminal equipment needs to receive or detect or measure related information of the SSB in the secondary cell is represented by one bit, for example. The relationship between the value of this one bit and whether the one SCell is transmitting an SSB and/or whether the terminal equipment needs to receive or detect or measure the SSB in the one SCell can be found by referring to the embodiments in the second aspect. The above content is incorporated here and will not be repeated here.

In some embodiments, the secondary cell is a secondary cell configured with or supporting on-demand synchronization signal block transmission.

In some embodiments, a terminal equipment performs an operation related to reception or detection or measurement of an SSB in a secondary cell according to the second indication information, which may be found by referring to the embodiments of the first aspect of the present application. The above content is incorporated here and will not be repeated here.

According to the above embodiments, the network device transmits related information indicating whether the secondary cell is transmitting a synchronization signal block (SSB) to the terminal equipment and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB.

The implementation and noun definitions of this embodiment are similar to those of the embodiments in the second aspect of the present application. The above related content is incorporated here and will not be repeated here.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Sixth Aspect

The embodiments of the present application provide a data transmission method, which is explained from a network device side.

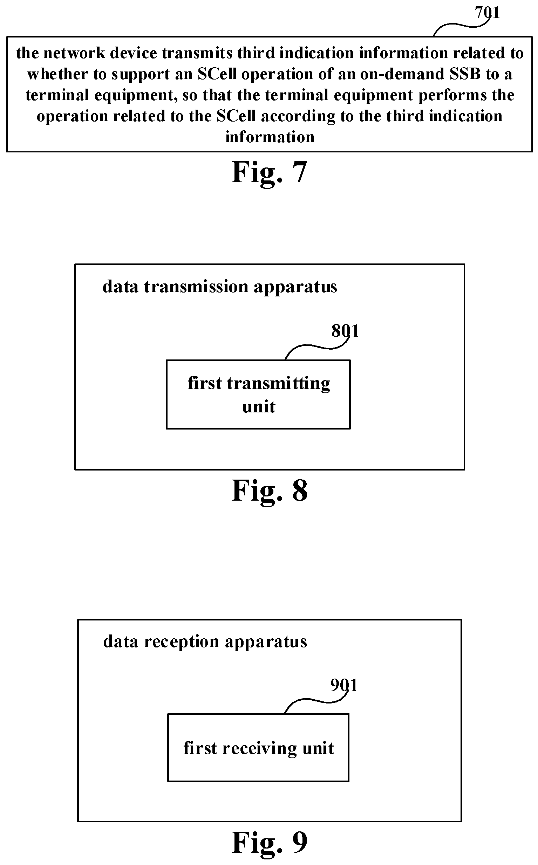

FIG. 7 is another schematic diagram of a data transmission method in embodiments of the present application, the data transmission method being applied to a network device, as shown in FIG. 7, the data transmission method including:
701: the network device transmits third indication information related to whether to support a secondary cell (SCell) operation of an on-demand SSB to a terminal equipment, so that the terminal equipment performs an operation related to the secondary cell according to the third indication information.

According to the above embodiments, the network device transmits indication information related to whether to support the SCell operation of an on-demand synchronization signal block (SSB) to the terminal equipment. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

In some embodiments, the third indication information is used to indicate at least one of the following:
whether the network device supports a secondary cell (SCell) operation of an on-demand synchronization signal block (SSB); and
whether the secondary cell configured by the network device is configured with or supports on-demand SSB transmission.

In some embodiments, the third indication information is used to indicate whether the secondary cell configured by the network device is configured with or supports on-demand SSB transmission, including:
the third indication information is used to indicate whether at least one secondary cell configured by the network device is configured with or supports on-demand SSB transmission.

At this case, the third indication information indicates respectively whether each of at least one secondary cell configured by the network device is configured with or supports on-demand SSB transmission.

In some embodiments, the third indication information is included in system information of a primary cell (PCell), or the third indication information is carried by RRC signaling.

In some embodiments, the method further includes:
the network device receives information on whether to support an SCell operation of an on-demand synchronization signal block (SSB) reported by the terminal equipment.

In some embodiments, this information is, for example, the first indication information transmitted to the network by the data transmission method described in the embodiments the first or fourth aspect of the present application. The above content is incorporated here and will not be repeated here.

In some embodiments, the third indication information is included in information of a secondary cell added or modified by the network device for the terminal equipment.

In some embodiments, when the third indication information is used to indicate whether the network device supports the secondary cell (SCell) operation of the on-demand synchronization signal block (SSB), different values of the third indication information indicate that the network device supports or does not support the secondary cell operation of the on-demand synchronization signal block. For example, the third indication information is one bit, and different values of this one bit indicate that the network device supports or does not support a secondary cell operation of an on-demand synchronization signal block. The relationship between the value of this one bit and whether the network device supports a secondary cell (SCell) operation of an on-demand synchronization signal block (SSB) can be found by referring to the embodiments of the third aspect of the present application. The above content is incorporated here and will not be repeated here.

In some embodiments, presence or absence of the third indication information indicates whether the network device supports a secondary cell operation of an on-demand synchronization signal block. For example, the third indication information is one bit, and the relationship between the presence or absence of this one bit and whether the network device supports a secondary cell (SCell) operation of an on-demand synchronization signal block (SSB) can be found by referring to the embodiments of the third aspect of the present application. The above content is incorporated here and will not be repeated here.

In some embodiments, when the third indication information is used to indicate whether one secondary cell configured by the network device is configured with or supports on-demand SSB transmission, different values of the third indication information indicate that the configured SCell supports or does not support the secondary cell operation of the on-demand synchronization signal block, and the presence or absence of the third indication information indicates whether the configured SCell is configured with or supports a secondary cell operation of an on-demand synchronization signal block. For example, the third indication information is one bit, and the relationship between the value of this one bit and whether the one secondary cell configured by the network device is configured with or supports on-demand synchronization signal block (SSB) transmission can be found by referring to the embodiments of the third aspect of the present application. The above content is incorporated here and will not be repeated here.

In some embodiments, when the third indication information is used to indicate whether more than one secondary cell configured by the network device is configured with or supports on-demand SSB transmission, the third indication information is one bitmap, and each bit in the bitmap represents whether one of the more than one secondary cell configured by the network device is configured with or supports on-demand synchronization signal block (SSB) transmission, wherein the correspondence between the value of this one bit in the bitmap and whether a corresponding secondary cell is configured with or supports the on-demand SSB transmission can be found by referring to the embodiments of the third aspect, and will not be repeated here.

In some embodiments, at least one secondary cell configured by the network device includes at least one secondary cell added or modified by the network device for the terminal equipment.

In some embodiments, the network device configures at least one secondary cell configured thereby.

In some embodiments, the configuration includes configuring an uplink wake up signal for the at least one secondary cell, or configuring frequency information and/or time information and/or period information of an SSB for the at least one secondary cell.

In some embodiments, the third indication information includes information that the network device configures an uplink signal (e.g., Wake Up Signal, WUS) for the at least one secondary cell.

When the terminal equipment receives information that the network device configures an uplink wake up signal for one secondary cell, the terminal equipment considers that the one secondary cell supports the on-demand SSB transmission.

In some embodiments, the third indication information includes information that the network device configures frequency information and/or time information and/or period information of an SSB for the at least one secondary cell. The related description of the frequency information and/or the time information and/or the period information of the SSB can be found by referring to the embodiments of the third aspect of the present application.

When the terminal equipment receives the information that the network device configures frequency information and/or time information and/or period information of an SSB for one secondary cell, the terminal equipment considers that the one secondary cell supports the on-demand SSB transmission.

In some embodiments, the terminal equipment performs the operation related to the secondary cell according to the third indication information, which can be found by referring to the embodiments of the third aspect of the present application. The above content is incorporated here and will not be repeated here.

It can be seen from the above embodiments that the network device transmits indication information related to whether to support the SCell operation of an on-demand synchronization signal block (SSB) to the terminal equipment. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results.

The implementation and noun definitions of this embodiment are similar to those of the embodiments in the third aspect of the present application. The above related content is incorporated here and will not be repeated here.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the steps related to the present application are illustrated hereinbefore, but the present application is not limited to this. The data reception method of the present application may further include other steps, and specific details of these steps can be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

### Embodiments of a Seventh Aspect

The embodiments of the present application provide a data transmission apparatus applied/configured in a terminal equipment.

FIG. 8 is a schematic diagram of a data transmission apparatus in embodiments of the present application, as shown in FIG. 8, the data transmission apparatus including:
a first transmitting unit 801 configured to transmit first indication information to a network device, wherein the first indication information is used for indicating that the terminal equipment supports a secondary cell operation of an on-demand synchronization signal block or that the terminal equipment does not support the secondary cell operation of the on-demand synchronization signal block.

According to the above embodiments, the terminal equipment may transmit indication information indicating the terminal equipment supports or does not support a secondary cell operation of an on-demand synchronization signal block to a network device, thereby being able to cause the network device to know UE capability and to help the network device to determine whether to configure a secondary cell (SCell) with on-demand synchronization signal block (SSB) transmission or configure which SCells have on-demand SSB transmission for the UE, thereby causing the network device to perform configuration in consistent with the UE capability, avoiding incorrect or invalid configuration caused by inconsistency between the network configuration and the UE capability, and solving one of the above problems existing in the related art.

In some embodiments, the first indication information is included in a UE capability information message or an RRC setup request message or an RRC setup complete message or an RRC reconfiguration complete message or a UE assistance information message.

In some embodiments, the first indication information is one bit, which is used to indicate the terminal equipment supports or does not support the secondary cell operation of the on-demand synchronization signal block.

In this embodiment, different values of the first indication information indicate whether the terminal equipment supports an SCell operation of an on-demand SSB, or presence or absence of the first indication information indicates whether the terminal equipment supports the SCell operation of on-demand SSB. Details can be found by referring to the embodiments of the first aspect of the present application. The above content is incorporated here and will not be repeated here.

In some embodiments, the first indication information is used to indicate that the terminal equipment supports or does not support the secondary cell operation of the on-demand synchronization signal block in at least one of the following carrier aggregation modes:
intra-band carrier aggregation (intra-band CA);
inter-band carrier aggregation (inter-band CA);
intra-band co-located carrier aggregation (intra-band co-located CA);
intra-band non co-located carrier aggregation (intra-band non co-located CA);
intra frequency range 1 (FR1) carrier aggregation;
intra frequency range 2 (FR2) carrier aggregation; or
carrier aggregation across FR1 and FR2.

Therefore, the terminal equipment indicates to the network device whether it supports or does not support the secondary cell operation of the on-demand synchronization signal block according to different carrier aggregation modes, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between the network configuration and the UE capability.

In some embodiments, the first indication information is used to indicate that the terminal equipment supports or does not support the secondary cell operation of the on-demand synchronization signal block in one carrier aggregation mode. The first indication information is one bit. The relationship between the value of this one bit and that the terminal equipment supports or does not support the secondary cell operation of the on-demand synchronization signal block in one carrier aggregation modes may be found by referring to the embodiments of the first aspect of the present application. The above content is incorporated here and will not be repeated here.

In some embodiments, the first indication information is used to indicate that the terminal equipment supports or does not support the secondary cell operation of the on-demand synchronization signal block for more than one carrier aggregation mode. The first indication information is a bitmap, and the relationship between the value of this one bit in the bitmap and that the terminal equipment supports or does not support the secondary cell operation of the on-demand synchronization signal block in one of the above-mentioned more than one carrier aggregation mode may be found by referring to the first aspect of the present application. The above content is incorporated here and will not be repeated here.

In some embodiments, the first indication information respectively indicates that the terminal equipment supports the secondary cell operation of the on-demand synchronization signal block in one or more bands or band combinations supported by carrier aggregation, or the first indication information respectively indicates that the terminal equipment does not support the secondary cell operation of the on-demand synchronization signal block in each frequency band or band combination supported by carrier aggregation.

Therefore, the terminal equipment indicates to the network device whether it supports or does not support the secondary cell operation of the on-demand synchronization signal block according to different bands or band combinations, and this can help the network device to determine whether to configure a secondary cell (SCell) with on-demand synchronization signal block (SSB) transmission or configure which SCells have on-demand SSB transmission for the UE, so as to avoid incorrect or invalid configuration caused by inconsistency between the network configuration and the UE capability.

According to the above embodiments, the terminal equipment transmits indication information indicating the terminal equipment supports or does not support a secondary cell operation of an on-demand synchronization signal block to a network device, thereby being able to cause the network device to know UE capability and to help the network device to determine whether to configure a secondary cell (SCell) with on-demand synchronization signal block (SSB) transmission or configure which SCells have on-demand SSB transmission for the UE, thereby performing configuration in consistent with the UE capability, avoiding incorrect or invalid configuration caused by inconsistency between the network configuration and the UE capability.

The implementation and noun definitions of this embodiment are similar to those of the embodiments in the first aspect of the present application. The above related content is incorporated here and will not be repeated here.

In addition, for the sake of simplicity, FIG. 8 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of an Eighth Aspect

The embodiments of the present application provide a data reception apparatus applied/configured in a terminal equipment.

FIG. 9 is a schematic diagram of a data reception apparatus in embodiments of the present application, as shown in FIG. 9, the data reception apparatus including:
a first receiving unit 901 configured to receive second indication information transmitted by a network device, wherein the second indication information is used to indicate whether a secondary cell (SCell) is transmitting related information of a synchronization signal block (SSB), and/or whether the terminal equipment needs to receive or detect or measure the synchronization signal block in the secondary cell.

According to the above embodiments, the terminal equipment receives related information indicating whether the secondary cell is transmitting a synchronization signal block (SSB) transmitted by the network device and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB, reducing waste of wireless resources, and thus solving one of the above problems existing in the related art.

In some embodiments, the second indication information is carried by RRC signaling.

In some embodiments, the second indication information is included in configuration of a secondary cell added or modified by the network device for the terminal equipment, or in measurement configuration.

In some embodiments, the second indication information is included in downlink control information (DCI) or a medium access control control element (MAC CE).

In some embodiments, the second indication information is one bit, which is used to indicate whether one secondary cell configured by the network device for the terminal equipment is transmitting related information of an on-demand synchronization signal block, and/or whether the terminal equipment needs to receive or detect or measure the synchronization signal block in one secondary cell configured by the network device for the terminal equipment. The relationship between the value of this one bit and whether the one SCell is transmitting an SSB and/or whether the terminal equipment needs to receive or detect or measure the SSB in the one SCell can be found by referring to the embodiments in the second aspect. The above content is incorporated here and will not be repeated here.

Alternatively, the second indication information is a bitmap, and one bit in the bitmap respectively indicates whether one of at least one secondary cell configured by the network device for the terminal equipment is transmitting related information of an on-demand synchronization signal block, and/or whether the terminal equipment needs to receive or detect or measure the synchronization signal block in one of the at least one secondary cell configured by the network device for the terminal equipment. The relationship between the value of each bit in this bitmap and whether a corresponding one SCell is transmitting an SSB and/or whether the terminal equipment needs to receive or detect or measure the SSB in one SCell, and the order of the bits corresponding to the more than one secondary cell in the bitmap can be found by referring to the embodiments in the second aspect. The above contents are incorporated here and will not be repeated here.

In some embodiments, the second indication information includes configuration of a measurement object corresponding to frequency of the synchronization signal block (SSB) of the secondary cell (SCell). If the network device configures the terminal equipment to measure frequency of an SSB of an SCell, the terminal equipment considers that the SCell is transmitting the SSB.

In some embodiments, the second indication information includes frequency information (e.g., absoluteFrequencySSB) of the SSB of the SCell and/or time information of the SSB of the SCell and/or configuration of period information of the SSB of the SCell. If the network device is configured with frequency information and/or time information and/or period information of the SSB of the SCell, the terminal equipment considers that the SCell is transmitting the SSB.

In some embodiments, the second indication information is a secondary cell activation/deactivation MAC CE (SCell Activation/Deactivation MAC CE).

In some embodiments, the second indication information includes a cell ID or a cell index of the secondary cell, as well as whether the secondary cell is transmitting an on-demand SSB or whether the terminal equipment needs to receive or detect or measure the synchronization signal block in the secondary cell.

In some embodiments, the secondary cell is a secondary cell configured with or supporting on-demand synchronization signal block transmission.

In some embodiments, the data reception apparatus further includes:
a second transmitting unit 902 (not shown) configured to initiate or transmit to the network device, an uplink signal (e.g., an uplink Wake Up Signal, WUS) for requesting an on-demand synchronization signal block (SSB) on the secondary cell in the case that the second indication information is used for indicating that the secondary cell is not transmitting the synchronization signal block (SSB) and/or the terminal equipment needs to receive or detect or measure the synchronization signal block in one secondary cell.

In some embodiments, the data reception apparatus further includes:
a first processing unit 903 (not shown) configured to not receive or not detect or not measure the SSB on the secondary cell, and/or stop receiving or stop detecting or stop measuring the SSB on the secondary cell, and/or stop beam failure detection procedure on the secondary cell, in the case that the second indication information is used for indicating that the secondary cell is not transmitting the synchronization signal block (SSB) and/or the terminal equipment does not need to receive or does not need to detect or does not need to measure the synchronization signal block in the secondary cell.

In some embodiments, the data reception apparatus further includes:
a second processing unit 904 (not shown) configured to, in the case that the second indication information is used for indicating that the secondary cell is transmitting the synchronization signal block (SSB) and/or the terminal equipment needs to receive or detect or measure the synchronization signal block in the secondary cell, receive or detect or measure the SSB on the secondary cell, and/or the terminal equipment starts to receive or detect or measure the SSB on the secondary cell after a first time period, and/or the terminal equipment receives or detects or measures the SSB on the secondary cell between second time periods.

In some embodiments, the first time period and the second time period are configured by a network or pre-defined.

According to the above embodiments, the terminal equipment receives related information indicating whether the secondary cell is transmitting a synchronization signal block (SSB) transmitted by the network device and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB, reducing waste of wireless resources.

The implementation and noun definitions of this embodiment are similar to those of the embodiments in the second aspect of the present application. The above related content is incorporated here and will not be repeated here.

In addition, for the sake of simplicity, FIG. 9 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of a Ninth Aspect

The embodiments of the present application provide a data reception apparatus applied/configured in a terminal equipment.

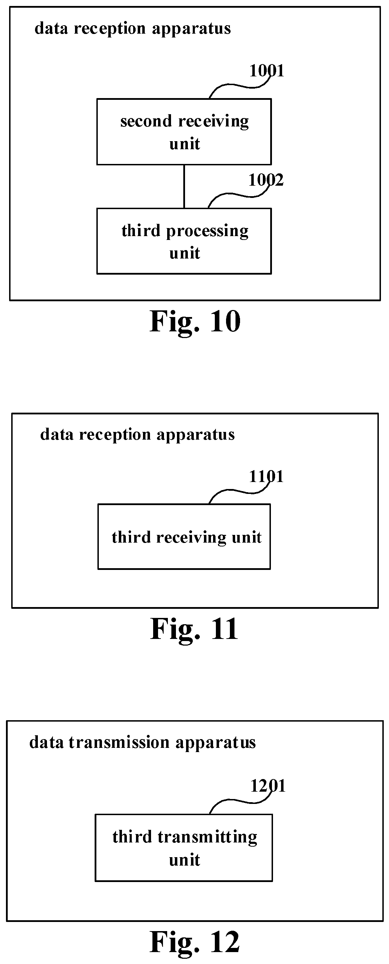

FIG. 10 is another schematic diagram of a data reception apparatus in embodiments of the present application, as shown in FIG. 10, the data reception apparatus including:
a second receiving unit 1001 configured to receive third indication information related to whether to support a secondary cell (SCell) operation of an on-demand SSB, transmitted by a network device; and
a third processing unit 1002 configured to perform the operation related to the secondary cell according to the third indication information.

According to the above embodiments, the terminal equipment receives indication information related to whether to support the SCell operation of an on-demand synchronization signal block (SSB) transmitted by the network device. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

In some embodiments, the third indication information is used to indicate at least one of the following:
whether the network device supports a secondary cell (SCell) operation of an on-demand synchronization signal block (SSB); and
whether the secondary cell configured by the network device is configured with or supports on-demand SSB transmission.

In some embodiments, the third indication information is included in system information of a primary cell (PCell), or the third indication information is carried by RRC signaling.

In some embodiments, the third indication information is one bit, and different values of this one bit indicate that the network device supports or does not support a secondary cell operation of an on-demand synchronization signal block, or different values of this one bit indicate that the secondary cell configured by the network device supports or does not support the on-demand SSB transmission.

In some embodiments, the third indication information is one bitmap, and each bit in the bitmap represents whether one of the more than one secondary cell configured by the network device is configured with or supports on-demand SSB transmission,
In some embodiments, at least one secondary cell configured by the network device includes at least one secondary cell added or modified by the network device for the terminal equipment. Correspondingly, the third indication information is one bit, and different values of this one bit indicates whether one secondary cell added or modified by the network device for the terminal equipment is configured with or supports the on-demand SSB transmission.

Alternatively, the third indication information is one bitmap, and one bit in the bitmap respectively indicates whether one of the at least one secondary cell added or modified by the network device for the terminal equipment is configured with or supports the on-demand SSB transmission.

In some embodiments, the third indication information is included in information of a secondary cell added or modified by the network device for the terminal equipment.

In some embodiments, the third indication information includes information that the network device configures an uplink signal for the secondary cell.

In some embodiments, the third processing unit 1002 is specifically configured such that:
the network device supports a secondary cell (SCell) operation of an on-demand synchronization signal block (SSB), the terminal equipment considers (determines) that the cell of the network device is a low-priority cell or a high-priority cell during a cell selection or reselection or handover procedure; or
the network device does not support a secondary cell (SCell) operation of an on-demand synchronization signal block (SSB), the terminal equipment considers (determines) that the cell of the network device is a high-priority cell or a low-priority cell during a cell selection or reselection or handover procedure.

In some embodiments, the third processing unit 1002 is specifically configured such that:
the secondary cell configured by the network device is configured with or supports the on-demand synchronization signal block (SSB) transmission, the terminal equipment applies a time-frequency synchronization method and/or a measurement method and/or an activation method corresponding to an on-demand synchronization signal block (SSB) to the secondary cell, or the terminal equipment does not perform time-frequency synchronization or measurement or activation of the secondary cell; or
the secondary cell configured by the network device is not configured with or does not support the on-demand synchronization signal block (SSB) transmission, the terminal equipment applies a reception method or a time-frequency synchronization method or a measurement method or an activation method corresponding to the synchronization signal block (SSB) to the secondary cell.

According to the above embodiments, the terminal equipment receives indication information related to whether to support the SCell operation of an on-demand synchronization signal block (SSB) transmitted by the network device. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results.

The implementation and noun definitions of this embodiment are similar to those of the embodiments in the third aspect of the present application. The above related content is incorporated here and will not be repeated here.

In addition, for the sake of simplicity, FIG. 10 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of a Tenth Aspect

The embodiments of the present application provide a data reception apparatus applied/configured in a network device.

FIG. 11 is another schematic diagram of a data reception apparatus in embodiments of the present application, as shown in FIG. 11, the data reception apparatus including:
a third receiving unit 1101 configured to receive first indication information transmitted by a terminal equipment,
wherein the first indication information is used for indicating that the terminal equipment supports a secondary cell operation of an on-demand synchronization signal block or that the terminal equipment does not support the secondary cell operation of the on-demand synchronization signal block.

According to the above embodiments, the network device receives indication information indicating the terminal equipment supports or does not support a secondary cell operation of an on-demand synchronization signal block from the terminal equipment, thereby being able to cause the network device to know UE capability and to help the network device to determine whether to configure a secondary cell (SCell) with on-demand synchronization signal block (SSB) transmission or configure which SCells have on-demand SSB transmission for the UE, thereby performing configuration in consistent with the UE capability, avoiding incorrect or invalid configuration caused by inconsistency between the network configuration and the UE capability, and solving one of the above problems existing in the related art.

In some embodiments, the first indication information is included in a UE capability information message, or an RRC setup request message, or an RRC setup complete message.

In some embodiments, the first indication information is one bit, which is used to indicate the terminal equipment supports or does not support the secondary cell operation of the on-demand synchronization signal block.

In some embodiments, the first indication information is used to indicate that the terminal equipment supports or does not support the secondary cell operation of the on-demand synchronization signal block in at least one of the following carrier aggregation modes:
intra-band carrier aggregation (intra-band CA);
inter-band carrier aggregation (inter-band CA);
intra-band co-located carrier aggregation (intra-band co-located CA);
intra-band non co-located carrier aggregation (intra-band non co-located CA);
intra frequency range 1 (FR1) carrier aggregation;
intra frequency range 2 (FR2) carrier aggregation; or
carrier aggregation across FR1 and FR2.

In some embodiments, the first indication information is used to respectively indicate that the terminal equipment supports the secondary cell operation of the on-demand synchronization signal block in each frequency band or band combination supported by carrier aggregation, or the first indication information is used to respectively indicate that the terminal equipment does not support the secondary cell operation of the on-demand synchronization signal block in each frequency band or band combination supported by carrier aggregation.

According to the above embodiments, the network device receives indication information indicating the terminal equipment supports or does not support a secondary cell operation of an on-demand synchronization signal block from the terminal equipment, thereby being able to cause the network device to know UE capability and to help the network device to determine whether to configure a secondary cell (SCell) with on-demand synchronization signal block (SSB) transmission or configure which SCells have on-demand SSB transmission for the UE, thereby performing configuration in consistent with the UE capability, avoiding incorrect or invalid configuration caused by inconsistency between the network configuration and the UE capability.

The implementation and noun definitions of this embodiment are similar to those of the embodiments in the fourth aspect of the present application. The above related content is incorporated here and will not be repeated here.

In addition, for the sake of simplicity, FIG. 11 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of an Eleventh Aspect

The embodiments of the present application provide a data transmission apparatus applied/configured in a network device.

FIG. 12 is another schematic diagram of a data transmission apparatus in the embodiments of the present application, as shown in FIG. 12, the data transmission apparatus including:
a third transmitting unit 1201 configured to transmit second indication information to a terminal equipment, wherein the second indication information is used to indicate whether a secondary cell (SCell) is transmitting related information of a synchronization signal block (SSB), and/or whether the terminal equipment needs to receive or detect or measure the synchronization signal block in the secondary cell, such that the terminal equipment performs an action related to reception or detection or measurement of the synchronization signal block (SSB) in the secondary cell according to the second indication information.

According to the above embodiments, the network device transmits related information indicating whether the secondary cell is transmitting a synchronization signal block (SSB) to the terminal equipment and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB, and thus solving one of the above problems existing in the related art.

In some embodiments, the second indication information is carried by RRC signaling.

In some embodiments, the second indication information is included in configuration of a secondary cell added or modified by the network device for the terminal equipment, or in measurement configuration.

In some embodiments, the second indication information includes configuration of a measurement object corresponding to frequency of the synchronization signal block (SSB) of the secondary cell (SCell).

In some embodiments, the second indication information is included in downlink control information (DCI) or a medium access control control element (MAC CE).

In some embodiments, the second indication information serves as a secondary cell activation/deactivation MAC CE (SCell Activation/Deactivation MAC CE).

In some embodiments, the second indication information further includes a cell identifier or a cell index of the secondary cell.

In some embodiments, the second indication information is one bit, which is used to indicate whether one secondary cell configured by the network device for the terminal equipment is transmitting related information of an on-demand synchronization signal block, and/or whether the terminal equipment needs to receive or detect or measure the synchronization signal block in one secondary cell configured by the network device for the terminal equipment; or
the second indication information is a bitmap, and one bit in the bitmap respectively indicates whether one of at least one secondary cell configured by the network device for the terminal equipment is transmitting related information of an on-demand synchronization signal block, and/or whether the terminal equipment needs to receive or detect or measure the synchronization signal block in one of the at least one secondary cell configured by the network device for the terminal equipment.

In some embodiments, the second indication information includes configuration of frequency information and/or time information and/or period information of the synchronization signal block transmitted by the secondary cell.

In some embodiments, the data reception apparatus further includes:
a fourth receiving unit 1202 (not shown in figures) configured to receive an uplink signal (e.g., an uplink Wake Up Signal, WUS) for requesting an on-demand synchronization signal block (SSB) on the secondary cell transmitted by the terminal equipment in the case that the second indication information is used for indicating that the secondary cell is not transmitting the synchronization signal block (SSB) and/or the terminal equipment needs to receive or detect or measure the synchronization signal block in one secondary cell.

According to the above embodiments, the network device transmits related information indicating whether the secondary cell is transmitting a synchronization signal block (SSB) to the terminal equipment and/or indication information indicating whether the terminal equipment needs to receive or detect or measure the synchronization signal block in the secondary cell. Therefore, the terminal equipment may perform a procedure related to SSB reception only when the SCell transmits the SSB, which is conducive to saving the power of the terminal equipment, avoiding inaccurate detection or measurement results of the SCell obtained by the terminal equipment, and avoiding the UE from initiating a corresponding failure procedure due to failure to receive the SSB.

The implementation and noun definitions of this embodiment are similar to those of the embodiments in the fifth aspect of the present application. The above related content is incorporated here and will not be repeated here.

In addition, for the sake of simplicity, FIG. 12 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of a Twelfth Aspect

The embodiments of the present application provide a data transmission apparatus applied/configured in a network device.

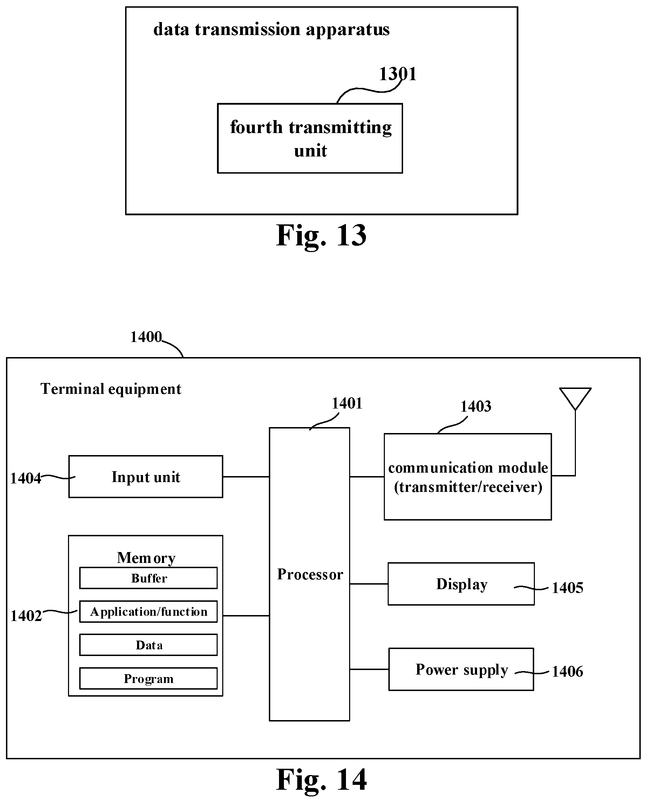

FIG. 13 is another schematic diagram of a data transmission apparatus in the embodiments of the present application, as shown in FIG. 13, the data transmission apparatus including:
a fourth transmitting unit 1301 configured to transmit third indication information related to whether to support a secondary cell (SCell) operation of an on-demand SSB to a terminal equipment, so that the terminal equipment performs the operation related to the secondary cell according to the third indication information.

According to the above embodiments, the network device transmits indication information related to whether to support the SCell operation of an on-demand synchronization signal block (SSB) to the terminal equipment. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results, and solving one of the above problems existing in the related art.

In some embodiments, the third indication information is used to indicate that:
the network device supports a secondary cell (SCell) operation of an on-demand synchronization signal block (SSB), or the network device does not support a secondary cell (SCell) operation of an on-demand synchronization signal block (SSB).

In some embodiments, the third indication information is included in system information of a primary cell (PCell), or the third indication information is carried by RRC signaling.

In some embodiments, the third indication information is one bit.

In some embodiments, the third indication information is used to indicate that:
the secondary cell configured by the network device is configured with or supports the on-demand synchronization signal block (SSB) transmission; or
the secondary cell configured by the network device is not configured with or does not support the on-demand synchronization signal block (SSB) transmission.

In some embodiments, the third indication information is included in information of a secondary cell added or modified by the network device for the terminal equipment.

In some embodiments, the third indication information is one bit, and is used to indicate whether one secondary cell added or modified by the network device for the terminal equipment is configured with or supports the on-demand SSB transmission; or
the third indication information is one bitmap, and one bit in the bitmap respectively indicates whether one of the at least one secondary cell added or modified by the network device for the terminal equipment is configured with or supports the on-demand SSB transmission.

In some embodiments, the third indication information includes information that the network device configures an uplink signal (e.g., an uplink Wake Up Signal, WUS) for the secondary cell.

According to the above embodiments, the network device transmits indication information related to whether to support the SCell operation of an on-demand synchronization signal block (SSB) to the terminal equipment. Therefore, the terminal equipment is able to know which SCell has or supports on-demand SSB transmission, and to perform the operation related to the secondary cell according to the indication information, thereby avoiding the terminal equipment from failing to perform time-frequency synchronization on the SCell or obtaining inaccurate measurement results.

The implementation and noun definitions of this embodiment are similar to those of the embodiments in the sixth aspect of the present application. The above related content is incorporated here and will not be repeated here.

In addition, for the sake of simplicity, FIG. 13 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

### Embodiments of a Thirteenth Aspect

The embodiments of the present application provide a communication system, referring to FIG. 1, the communication system including a network device 101 and terminal equipments 102 and 103.

In the embodiments of the present application, the terminal equipments 102 and 103 are configured to execute the data transmission method according to the first aspect, and/or the data reception method according to the second aspect, and/or the data reception method according to the third aspect of the present application. The related contents are incorporated herein and will not be repeated here.

In the embodiments of the present application, the network device 101 is configured to execute the data reception method according to the fourth aspect, and/or the data transmission method according to the fifth aspect, and/or the data transmission method according to the sixth aspect of the present application. The related contents are incorporated herein and will not be repeated here.

### Embodiments of a Fourteenth Aspect

The embodiments of the present application provide a terminal equipment.

FIG. 14 is a schematic diagram of composition of a terminal equipment in the embodiments of the present application, and the terminal equipment may be a remote terminal equipment. As shown in FIG. 14, the terminal equipment 1400 may include a processor 1401 and a memory 1402; the memory 1402 stores data and program, and is coupled to the processor 1401. It is worth noting that this figure is exemplary; other types of structures may also be used in addition to or instead of the structure to implement telecommunications functions or other functions.

For example, the processor 1401 may be configured to execute the program to implement the data transmission method as described in the embodiments of the first aspect. For example, the processor 1401 may be configured to perform the following operation of: transmitting first indication information to a network device, wherein the first indication information is used for indicating that the terminal equipment supports a secondary cell operation of an on-demand synchronization signal block or that the terminal equipment does not support the secondary cell operation of the on-demand synchronization signal block.

For another example, the processor 1401 may be configured to execute the program to implement the data reception method as described in the embodiments of the second aspect. For example, the processor 1401 may be configured to perform the following operation of: receiving second indication information transmitted by a network device, wherein the second indication information is used to indicate whether a secondary cell (SCell) is transmitting related information of a synchronization signal block (SSB), and/or whether the terminal equipment needs to receive or detect or measure the synchronization signal block in the secondary cell.

For another example, the processor 1401 may be configured to execute the program to implement the data reception method as described in the embodiments of the third aspect. For example, the processor 1401 may be configured to perform the following operation of: receiving third indication information related to whether to support a secondary cell (SCell) operation of an on-demand SSB transmitted by the network device; and performing the operation related to the secondary cell according to the third indication information.

As shown in FIG. 14, the terminal equipment 1400 may further include a communication module 1403, an input unit 1404, a display 1405, and a power supply 1406. The functions of the above components are similar to the relevant art, and will not be repeated here. It is worth noting that the terminal equipment 1400 is not necessarily required to include all of the components shown in FIG. 14, and the above components are not essential; in addition, the terminal equipment 1400 may further include components not shown in FIG. 14, with reference to the relevant art.

The embodiments of the present application provide a network device, which may be, for example, a base station, but which is not limited in the present application, and can also be other network devices.

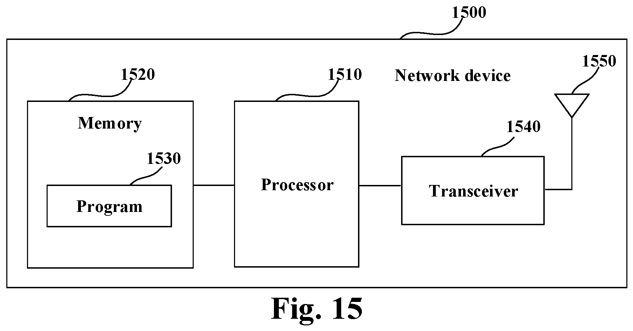

FIG. 15 is a schematic diagram of composition of a network device in the embodiments of the present application. As shown in FIG. 15, the network device 1500 may include a processor 1510 (such as a central processing unit (CPU)) and a memory 1520; the memory 1520 is coupled to the processor 1510. The memory 1520 may store various data and also may store a program 1530 for information processing, and the program 1530 is executed under the control of the processor 1510.

For example, the processor 1510 may be configured to execute the program to implement the data reception method as described in the embodiments of the fourth aspect. For example, the processor 1510 may be configured to perform the following control of: receiving first indication information transmitted by the terminal equipment, wherein the first indication information is used for indicating that the terminal equipment supports a secondary cell operation of an on-demand synchronization signal block or that the terminal equipment does not support the secondary cell operation of the on-demand synchronization signal block.

For example, the processor 1510 may be configured to execute the program to implement the data transmission method as described in the embodiments of the fifth aspect. For example, the processor 1510 may be configured to perform the following control of: transmitting second indication information to a terminal equipment, wherein the second indication information is used to indicate whether a secondary cell (SCell) is transmitting related information of a synchronization signal block (SSB), and/or whether the terminal equipment needs to receive or detect or measure the synchronization signal block in the secondary cell, such that the terminal equipment performs an action related to reception or detection or measurement of the synchronization signal block (SSB) in the secondary cell according to the second indication information.

For example, the processor 1510 may be configured to execute the program to implement the data transmission method as described in the embodiments of the sixth aspect. For example, the processor 1510 may be configured to perform the following control of: transmitting third indication information related to whether to support a secondary cell (SCell) operation of an on-demand SSB to a terminal equipment, so that the terminal equipment performs the operation related to the secondary cell according to the third indication information.

In addition, as shown in FIG. 15, the network device 1500 may further include: a transceiver 1540 and an antenna 1550, etc., wherein the functionalities of the above components are similar to the related art, and will not be repeated here. It is worth noting that the network device 1500 is not necessarily required to include all of the components shown in FIG. 15; in addition, the network device 1500 may further include components not shown in FIG. 15, with reference to the related art.

The embodiments of the present application further provide a computer readable program which, when being executed in a terminal equipment, causes the computer to execute, in the terminal equipment, the data transmission method according to the first aspect, and/or the data transmission method according to the second aspect, and/or the data reception method according to the third aspect of the present application.

The embodiments of the present application further provide a computer readable program which, when being executed in a network device, causes the computer to execute, in the network device, the data reception method according to the fourth aspect, and/or the data transmission method according to the fifth aspect, and/or the data transmission method according to the sixth aspect of the present application.

Embodiments of the present application further provide a storage medium storing a computer readable program which causes the computer to execute, in a terminal equipment, the data transmission method according to the first aspect, and/or the data transmission method according to the second aspect, and/or the data reception method according to the third aspect of the present application.

Embodiments of the present application further provide a storage medium storing a computer readable program which causes the computer to execute, in a network device, the data reception method according to the fourth aspect, and/or the data transmission method according to the fifth aspect, and/or the data transmission method according to the sixth aspect of the present application.

The above apparatuses and methods of the present application can be implemented by hardware or by hardware combined with software. Th present disclosure relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A data reception method applied to a terminal equipment, the data reception method including:
   receiving third indication information related to whether to support a secondary cell (SCell) operation of an on-demand SSB, transmitted by a network device; and
   performing the operation related to the secondary cell according to the third indication information.
2. The data reception method according to the supplement 1, wherein the third indication information is used to indicate that:
   the network device supports a secondary cell (SCell) operation of an on-demand synchronization signal block (SSB) or the network device does not support a secondary cell (SCell) operation of an on-demand synchronization signal block (SSB).
3. The data reception method according to the supplement 2, wherein
   the third indication information is included in system information of a primary cell (PCell), or the third indication information is carried by RRC signaling.
4. The data reception method according to the supplement 3, wherein
   the third indication information is one bit.
5. The data reception method according to the supplement 1, wherein the third indication information is used to indicate that:
   the secondary cell configured by the network device is configured with or supports the on-demand synchronization signal block (SSB) transmission; or
   the secondary cell configured by the network device is not configured with or does not support the on-demand synchronization signal block (SSB) transmission.
6. The data reception method according to the supplement 5, wherein
   the third indication information is included in information of a secondary cell added or modified by the network device for the terminal equipment.
7. The data reception method according to the supplement 6, wherein
   the third indication information is one bit, and is used to indicate whether one secondary cell added or modified by the network device for the terminal equipment is configured with or supports the on-demand SSB transmission; or
   the third indication information is one bitmap, and one bit in the bitmap respectively indicates whether one of the at least one secondary cell added or modified by the network device for the terminal equipment is configured with or supports the on-demand SSB transmission.
8. The data reception method according to the supplement 5, wherein
   the third indication information includes information that the network device configures an uplink signal for the secondary cell.
9. The data reception method according to the supplement 2, wherein performing the operation related to the secondary cell according to the third indication information includes:
   the network device supports a secondary cell (SCell) operation of an on-demand synchronization signal block (SSB), the terminal equipment considers/determines that the cell of the network device is a low-priority cell or a high-priority cell during a cell selection or reselection or handover procedure; or
   the network device does not support a secondary cell (SCell) operation of an on-demand synchronization signal block (SSB), the terminal equipment considers/determines that the cell of the network device is a high-priority cell or a low-priority cell during a cell selection or reselection or handover procedure.
10. The data reception method according to the supplement 5, wherein performing the operation related to the secondary cell according to the third indication information includes:
   the secondary cell configured by the network device is configured with or supports the on-demand synchronization signal block (SSB) transmission, the terminal equipment applies a time-frequency synchronization method and/or a measurement method and/or an activation method corresponding to an on-demand synchronization signal block (SSB) to the secondary cell, or the terminal equipment does not perform time-frequency synchronization or measurement or activation of the secondary cell; or
   the secondary cell configured by the network device is not configured with or does not support the on-demand synchronization signal block (SSB) transmission, the terminal equipment applies a reception method or a time-frequency synchronization method or a measurement method or an activation method corresponding to the synchronization signal block (SSB) to the secondary cell.

## Claims

1. A data transmission apparatus, applied to a terminal equipment, the data transmission apparatus comprising:
a first transmitting unit configured to transmit first indication information to a network device,
wherein the first indication information is used for indicating that the terminal equipment supports a secondary cell operation of an on-demand synchronization signal block or that the terminal equipment does not support a secondary cell operation of an on-demand synchronization signal block.

2. The data transmission apparatus according to claim 1, wherein,
the first indication information is comprised in a UE capability information message, or an RRC setup request message, or an RRC setup complete message.

3. The data transmission apparatus according to claim 2, wherein,
the first indication information is one bit, the bit being used to indicate that the terminal equipment supports or does not support the secondary cell operation of the on-demand synchronization signal block.

4. The data transmission apparatus according to claim 1, wherein, the first indication information is used to indicate that the terminal equipment supports or does not support the secondary cell operation of the on-demand synchronization signal block in at least one of the following carrier aggregation modes:
intra-band carrier aggregation (intra-band CA);
inter-band carrier aggregation (inter-band CA);
intra-band co-located carrier aggregation (intra-band co-located CA);
intra-band non co-located carrier aggregation (intra-band non co-located CA);
intra frequency range 1 (FR1) carrier aggregation;
intra frequency range 2 (FR2) carrier aggregation; or
carrier aggregation across FR1 and FR2.

5. The data transmission apparatus according to claim 4, wherein, the first indication information is used to respectively indicate that the terminal equipment supports or does not support the secondary cell operation of the on-demand synchronization signal block in each frequency band or band combination supported by carrier aggregation.

6. A data reception apparatus, applied to a terminal equipment, the data reception apparatus comprising:
a first receiving unit configured to receive second indication information transmitted by a network device,
wherein the second indication information is used to indicate whether a secondary cell is transmitting related information of a synchronization signal block (SSB) and/or whether the terminal equipment needs to receive or detect or measure a synchronization signal block in a secondary cell.

7. The data reception apparatus according to clam 6, wherein the second indication information is carried by RRC signaling.

8. The data reception apparatus according to clam 7, wherein the second indication information is comprised in configuration of a secondary cell added or modified by the network device for the terminal equipment, or in measurement configuration.

9. The data reception apparatus according to claim 7, wherein,
the second indication information comprises configuration of a measurement object corresponding to frequency of a synchronization signal block (SSB) of a secondary cell (SCell).

10. The data reception apparatus according to claim 6, wherein the second indication information is comprised in downlink control information (DCI) or a medium access control control element (MAC CE).

11. The data reception apparatus according to claim 10, wherein the second indication information is a secondary cell activation/deactivation MAC CE (SCell Activation/Deactivation MAC CE).

12. The data reception apparatus according to claim 10, wherein the second indication information further comprises a cell identifier or a cell index of a secondary cell.

13. The data reception apparatus according to claim 6, wherein,
the second indication information is one bit, the bit being used to indicate whether one secondary cell configured by the network device for the terminal equipment is transmitting related information of an on-demand synchronization signal block and/or whether the terminal equipment needs to receive or detect or measure a synchronization signal block in one secondary cell configured by the network device for the terminal equipment; or
the second indication information is a bitmap, and one bit in the bitmap indicates whether one of at least one secondary cell configured by the network device for the terminal equipment is transmitting related information of an on-demand synchronization signal block, and/or whether the terminal equipment needs to receive or detect or measure a synchronization signal block in one of the at least one secondary cell configured by the network device for the terminal equipment.

14. The data reception apparatus according to claim 6, wherein,
the second indication information comprises configuration of frequency information and/or time information and/or period information of a synchronization signal block transmitted by the secondary cell.

15. The data reception apparatus according to claim 6, wherein the data reception apparatus further comprises:
a second transmitting unit configured to initiate or transmit to the network device, an uplink signal for requesting an on-demand synchronization signal block (SSB) on the secondary cell in a case that the second indication information is used for indicating that the secondary cell is not transmitting a synchronization signal block (SSB) and/or the terminal equipment needs to receive or detect or measure a synchronization signal block in one secondary cell.

16. The data reception apparatus according to claim 6, wherein the data reception apparatus further comprises:
a first processing unit configured to not receive or not detect or not measure an SSB on the secondary cell, and/or stop receiving or stop detecting or stop measuring an SSB on the secondary cell, and/or stop a beam failure detection procedure on the secondary cell, in a case that the second indication information is used for indicating that the secondary cell is not transmitting a synchronization signal block (SSB) and/or the terminal equipment does not need to receive or does not need to detect or does not need to measure a synchronization signal block in the secondary cell.

17. The data reception apparatus according to claim 6, wherein the data reception apparatus further comprises:
a second processing unit configured to, in a case that the second indication information is used for indicating that the secondary cell is transmitting a synchronization signal block (SSB) and/or the terminal equipment needs to receive or detect or measure a synchronization signal block in the secondary cell, receive or detect or measure an SSB on the secondary cell, and/or the terminal equipment starts to receive or detect or measure an SSB on the secondary cell after a first time period, and/or the terminal equipment receives or detects or measures an SSB on the secondary cell in a second time period.

18. The data reception apparatus according to claim 17, wherein the first time period and the second time period are configured by a network or pre-defined.

19. The data reception apparatus according to claim 6, wherein the secondary cell is a secondary cell configured with or supporting on-demand synchronization signal block transmission.

20. A data reception apparatus, applied to a network device, the data reception apparatus comprising:
a second receiving unit configured to receive first indication information transmitted by a terminal equipment,
wherein the first indication information is used for indicating that the terminal equipment supports a secondary cell operation of an on-demand synchronization signal block or that the terminal equipment does not support a secondary cell operation of an on-demand synchronization signal block.
